# DEMANDE DE BREVET EUROPEEN

(11) **EP 4 711 269 A2**
(43) Date de publication de la demande: **18.03.2026**
(21) Numéro de dépôt: 25223609.6
(22) Date de dépôt: 02.03.2021
(51) Int. Cl.: B64C 15/02

(54) **DISPOSITIF DE PROPULSION ET PROCÉDÉ DE PILOTAGE DE L'ATTERRISSAGE D'UN TEL DISPOSITIF DE PROPULSION ASSOCIÉ**

(30) Priorité: 02.03.2020 FR 2002096
(62) Demande divisionnaire de: 21714252.0
(71) Demandeur: Zipair, 13220 Chateauneuf-les-Martigues (FR)
(72) Inventeur: ZAPATA, Frankie, 13740 LE ROVE (FR)
(74) Mandataire: Brun, Philippe Alexandre Georges

(57) **Abrégé**

L'invention concerne un dispositif de propulsion comportant une plateforme, un groupe de poussée, des moyens supports agencés pour maintenir et soutenir ledit groupe de poussée, coopérant solidairement avec ladite plateforme selon une ou plusieurs liaisons mécaniques adaptées, des moyens saillants, coopérant solidairement selon des liaisons mécaniques adaptées avec la plateforme, un pied central, passant par le centre d'inertie du dispositif de propulsion et coopérant solidairement selon une liaison mécanique adaptée en son extrémité proximale avec la plateforme. Pour permettre un atterrissage dudit dispositif de propulsion sur des surfaces de réception présentant des dimensions relativement réduites au regard du dispositif de propulsion et/ou mouvantes, les moyens saillants et le pied central sont mutuellement agencés de sorte que le pied central puisse assurer le premier contact entre ledit dispositif et une surface de réception dudit dispositif.

## Description

### Domaine technique

L'invention concerne le domaine des dispositifs et/ou systèmes de propulsion, généralement à propulsion verticale, préférentiellement mais non limitativement, adaptés ou agencés pour assurer les mouvements d'un passager ayant pris place sur ledit dispositif de propulsion ou d'éventuelles marchandises présentes dont le dispositif de propulsion assurerait le transport. L'invention concerne notamment des perfectionnements de tels dispositifs et/ou systèmes de propulsion en vue notamment de faciliter l'atterrissage desdits dispositifs et/ou systèmes sur des surfaces de réception de faibles dimensions, pouvant être également ou distinctement mouvantes, comme par exemple, lorsque de telles surfaces sont présentes en mer. L'invention se veut très simple à mettre en œuvre et accessible au plus grand nombre de dispositifs de propulsion.

Dans la suite du document, l'invention sera décrite, préférentiellement mais non limitativement, en application avec un dispositif de propulsion dédié à évoluer dans les airs, également qualifié d'aéronef ou aérodyne, un tel dispositif de propulsion étant agencé pour fournir une capacité de décollage et d'atterrissage sensiblement verticaux. A titre d'exemples non limitatifs, un tel dispositif de propulsion peut consister en un drone, un hélicoptère, dont un exemple de réalisation est décrit dans le document US2011/204182A1, ou un « Flyboard air », dont un exemple de réalisation est décrit dans le document WO 2017/174942 A1. L'invention ne saurait toutefois être limitée à ces seuls exemples d'application et pourrait être en lieu et place être employée en lien avec tout type de dispositif de propulsion.

### Arrière-plan Technologique

L'idée de naviguer ou de s'élever dans les airs est aussi ancienne que l'humanité : l'Homme a probablement très tôt désiré imiter le vol des oiseaux et nombreux chercheurs se sont adonnés à la conception de dispositifs volants. Parmi les plus connus, vers 1500, Léonard de Vinci effectue les premières études connues sur le vol des oiseaux et tente de concevoir une imitation mécanique d'un tel vol des oiseaux. Il a ainsi dessiné et proposé plusieurs idées de machines volantes, proches de l'avion, de l'hélicoptère et du parachute. Toutefois, toutes ces idées étaient basées sur l'exploitation de l'énergie musculaire pour faire fonctionner lesdites machines volantes, ce qui semblait à l'époque déjà inenvisageable. Les premiers vols sur une machine volante pilotée par des gouvernes ont été réalisés par les frères Wright aux États-Unis au début du vingtième siècle. C'est à cette même époque qu'ont commencé à être développé les premières machines volantes motorisées qui donneront par la suite naissance aux avions et aux hélicoptères. De telles machines volantes motorisées sont à l'heure actuelle qualifiées d'aérodynes consistant en des aéronefs, dont la sustentation est généralement au moyen d'un dispositif permettant la création d'une force aérodynamique et d'une voilure fixe dans le cas des avions ou tournante dans le cas des hélicoptères, permettant la création d'une portance.

Plus particulièrement, la possibilité, pour un hélicoptère, grâce à son agencement et ses fonctions, à décoller et atterrir sur des terrains relativement étroits et non préparés le rend particulièrement avantageux, voire même, dans certains cas, indispensable, afin d'assurer certaines missions et fonctions, malgré son autonomie et sa vitesse réduites. Un hélicoptère, dont un exemple de réalisation est décrit dans le document US2011/204182A1, peut, d'une manière générale, comporter un nombre limité de sous-ensembles, tels que :
- une cellule, généralement constituée d'un fuselage et d'un train d'atterrissage agencé pour aider aux fonctions de décollage et d'atterrissage. Le fuselage consiste en le cockpit ou la cabine de l'hélicoptère au sein duquel un ou plusieurs passagers et/ou (co-)pilotes peuvent prendre place. Le train d'atterrissage, plus particulièrement adapté ou agencé pour assurer le contact entre une surface de réception et l'hélicoptère, est, quant à lui, dans la plupart des cas, fixe, et comprend généralement deux atterrisseurs ou patins coopérant solidairement et respectivement selon des liaisons mécaniques adaptées avec le fuselage ;
- une voilure, comprenant un ou plusieurs rotors sustentateurs et/ou anti-couple ;
- un groupe motopropulseur, généralement constitué d'un moteur à pistons ou d'une ou plusieurs turbines coopérant avantageusement avec la voilure et permettant l'entraînement des rotors compris au sein de la voilure ;
- des commandes de vol comprenant des leviers et des pédales disposés à l'intérieur du poste de pilotage. De telles commandes sont le plus souvent doublées, de sorte à être employables par le pilote et/ou un copilote de l'hélicoptère ;
- des servitudes de bord, comprenant l'ensemble des dispositifs ou systèmes permettant l'alimentation en énergies nécessaires au fonctionnement de l'hélicoptère et au confort au sein de ce dernier, telles que par exemple, le carburant, l'électricité ou l'air conditionné ;
- une avionique, consistant en l'ensemble des équipements électroniques présents au sein de l'hélicoptère, comme par exemple, des capteurs, des calculateurs, des actionneurs et/ou des systèmes de communication ;
- des emports, généralement situés sur les côtés d'un hélicoptère, consistant en des ancrages permettant de fixer et transporter différents accessoires, tels que des missiles, des pods d'observation ou des réservoirs supplémentaires de carburant.

L'Homme cherche encore et toujours à repousser les limites de l'impossible : se déplacer aussi librement que possible dans l'espace est une préoccupation constante pour celui-ci, voire un rêve quasi-inaccessible pour certains. De nombreuses machines ont été élaborées, de la plus sommaire à la plus sophistiquée, pour parvenir à assouvir cet objectif avec plus ou moins de succès. Plus particulièrement, récemment, un dispositif particulièrement efficace, connu sous l'appellation « Flyboard Air », a été développé. Il est décrit notamment dans le document WO2017/174944 A1, et rencontre un franc succès. Les figures 1 et 2 présentent ainsi et respectivement une vue en perspective et une vue éclatée d'un premier mode de réalisation non limitatif d'un tel dispositif de propulsion 10, dont une partie des éléments ne sera pas décrite dans la suite du document à des fins de simplification.

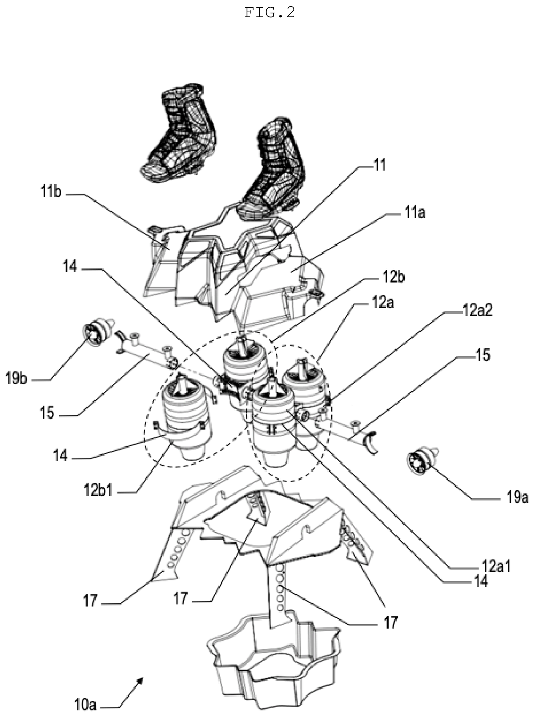

Un tel dispositif 10 comporte un corps principal 10a sous la forme principalement d'une plateforme 11 sur laquelle un passager 1 peut éventuellement prendre place. Selon les dimensions de la plateforme 11 et la puissance du groupe de poussée 12 du dispositif 10, plusieurs passagers peuvent éventuellement prendre position simultanément sur ladite plateforme 11. La plateforme 11 présente, à ce titre, une ou plusieurs plages 11a agencées pour accueillir les pieds ou chaussures du passager 1, comme l'indique plus distinctivement notamment la figure 2. En variante ou en complément, un tel dispositif 10 peut être agencé pour assurer le transport de marchandises.

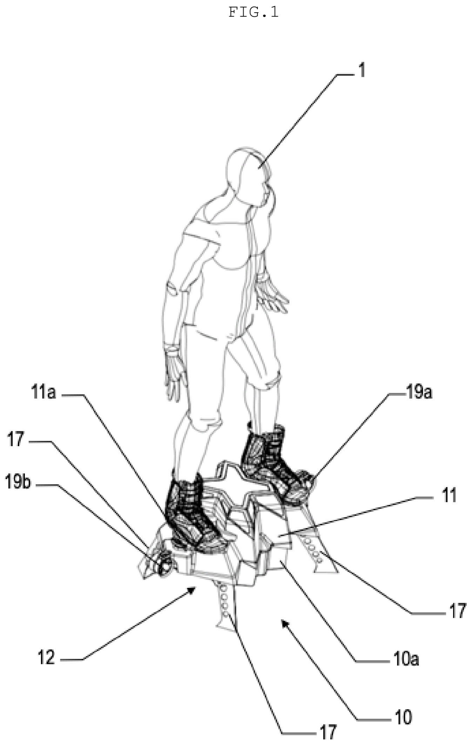

Le corps 10a du dispositif de propulsion 10, décrit en liaison avec les figures 1 et 2, comporte un groupe de poussée 12 coopérant avec la plateforme 11.

Comme l'indique ladite figure 2 et à titre d'exemple non limitatif, le groupe de poussée 12 consiste avantageusement en une paire de sous-groupes de poussée 12a et 12b comprenant chacun deux propulseurs. Ainsi, un premier sous-groupe de poussée 12a comporte deux propulseurs 12a1 et 12a2. Il en est de même pour le sous-groupe de poussée 12b qui comporte deux propulseurs 12b1 et 12b2. En variante, de tels sous-groupes pourraient comporter plus de deux propulseurs. Pour offrir des conditions de manœuvrabilité optimales grâce à l'orientation du corps du passager, conformément au mode de réalisation décrit en lien avec les figures 1 et 2, les propulseurs du groupe de poussée 12 sont avantageusement positionnés le plus au centre possible du corps 10a du dispositif 10. Ainsi, préférentiellement, comme l'indiquent les figures 1 et 2, les plages 11a agencées sur la plateforme 11 pour accueillir les pieds ou chaussures du passager 1 seront avantageusement positionnées de part et d'autre dudit groupe de poussée 12.

Pour pouvoir notamment pivoter aisément, évoluer en courbes et ainsi accroître les mouvements opérables par ledit dispositif de propulsion 10, le groupe de poussée 12 peut avantageusement comporter deux propulseurs secondaires 19a et 19b correcteurs de cap, disposés de manière excentrée selon un axe transversal de la plateforme. En variante ou en complément, afin de s'affranchir de l'emploi de tels propulseurs secondaires, l'invention prévoit de pouvoir adjoindre à tout ou partie des propulseurs du ou des sous-groupes de poussée 12a, 12b une sortie de fluide orientable, de type cône orientable d'une sortie de fluide d'un jet ski par exemple, qui coopèrerait avec la tuyère d'éjection du flux gazeux du ou des propulseurs concernés, selon une ou des liaisons mécaniques respectives adaptées, telles que par exemple des liaisons pivot ou encastrement.

Les différents propulseurs du groupe de poussée sont maintenus et soutenus par des moyens supports 14. Ces moyens 14 constituent l'équivalent fonctionnel d'un châssis soutenant la plateforme 11. Comme évoqué précédemment, un tel groupe de poussée 12 comporte deux sous-groupes de poussée 12a et 12b comprenant chacun deux propulseurs, référencés 12a1 et 12a2 pour le premier, et 12b1 et 12b2 pour le deuxième. De tels propulseurs consistent préférentiellement en des turboréacteurs. Un turboréacteur est un moteur thermique, couramment exploité en aéronautique, qui transforme l'énergie potentielle contenue dans un carburant, par exemple du kérosène ou équivalent, associé à un comburant, en l'occurrence l'air ambiant aspiré par une entrée de fluide du corps 10a, en énergie cinétique. Cette énergie cinétique génère une force de réaction en milieu élastique, dans le sens opposé à l'éjection d'un rejet gazeux. Il en résulte une accélération d'une certaine quantité d'air entre l'entrée de fluide du propulseur et la tuyère d'éjection de ce dernier, produisant une poussée par détente dans ladite tuyère d'éjection. Un tel propulseur utilise un compresseur d'air à aubes ou rotors. Tout autre type de carburant pourrait éventuellement être utilisé en lieu et place du kérosène évoqué précédemment.

Pour associer aux sous-groupes de poussée 12a et 12b des propulseurs secondaires correcteurs de cap 19a et 19b et ainsi permettre des trajectoires courbes, les moyens supports 14 d'un dispositif 10 conforme à l'invention peuvent coopérer avec des moyens supports secondaires 15 agencés pour coopérer avec des propulseurs secondaires correcteurs de cap 19a et 19b et maintenir ces derniers selon une orientation de poussée sensiblement parallèle à un axe longitudinal de la plateforme 11. De tels propulseurs secondaires correcteurs de cap 19a et 19b permettent notamment d'accroître la maniabilité dudit dispositif de propulsion. En variante, un agencement de propulseurs thermiques correcteurs de cap 19a et 19b, pourrait consister en l'exploitation d'un turbopropulseur, en lieu et place de chaque turbine électrique, sensiblement orienté parallèle aux propulseurs des sous-groupes de poussée 12a et 12b. Pour conserver une forte réactivité, une sortie de fluide orientable, de type cône orientable d'une sortie de fluide d'un jet ski, pourrait coopérer avec la tuyère d'éjection de gaz du propulseur secondaire thermique. En orientant ledit cône dans un plan médian de la plateforme 11, on obtient un résultat somme tout proche de celui-ci conféré par l'utilisation de turbines électriques.

Par ailleurs, pour faciliter le décollage et l'atterrissage du dispositif de propulsion, le corps 10a d'un tel dispositif 10 comporte des moyens saillants 17, pouvant être également assimilés à un train d'atterrissage, coopérant solidairement selon des liaisons mécaniques adaptées avec la plateforme 11 et agencés pour prévenir tout choc ou contact direct entre le sol ou plus largement une surface de réception et le groupe de poussée 12 du dispositif 10 lors de l'atterrissage et/ou le décollage de ce dernier. Finalement, lesdits moyens saillants 17 sont agencés pour assurer le contact entre une surface de réception G et le dispositif de propulsion 10. De tels moyens 17 peuvent comprendre ou consister notamment en quatre pieds de longueurs suffisantes pour que la ou les tuyères d'éjection du groupe de poussée 12 ne puissent heurter le sol et pour offrir également une certaine stabilité, lorsque le dispositif est sur le sol ou sur une station de décollage, non représentée en figures 1 et 2, afin que le passager puisse prendre efficacement position sur la plateforme 11. En variante, de tels moyens 17 pourraient consister en une paire de skis ou tout autre élément apte à assurer une certaine stabilité selon la nature du sol ou du support du dispositif sur lequel un tel dispositif est susceptible de se poser. En variante ou en complément, pour éviter qu'un dispositif de propulsion ne puisse heurter un obstacle durant les phases de vol, de tels moyens 17 peuvent être, pour tout ou partie, rétractables, escamotables et/ou télescopiques.

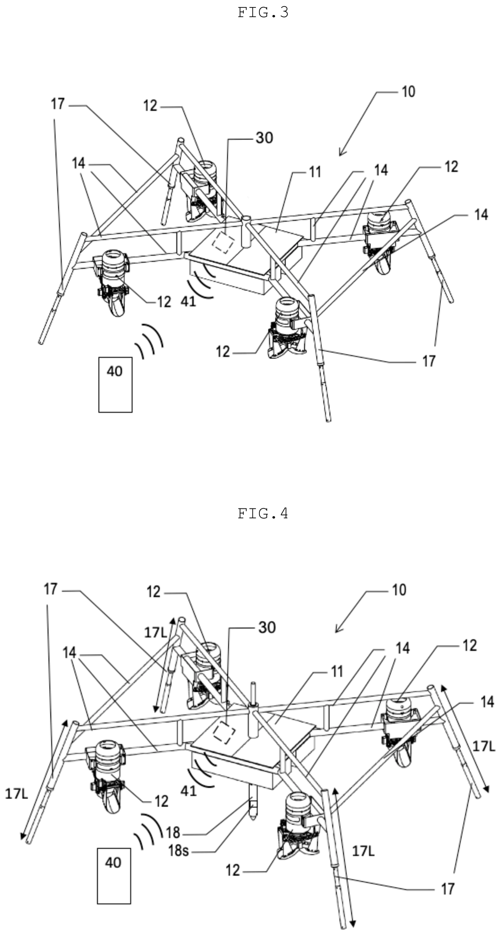

Comme mentionné précédemment, le ou les groupes de poussée du dispositif de propulsion selon le premier mode de réalisation sont agencés de sorte à réduire le moment d'inertie que le passager doit vaincre pour modifier, à l'aide de son corps, l'assiette du dispositif 10 et ainsi se mouvoir. En conséquence, ce sont les mouvements du passager, à l'aide de son corps, qui vont générer la trajectoire dudit dispositif de propulsion. Les différents éléments précédemment décrits pour optimiser la maniabilité dudit dispositif de propulsion, tels que les propulseurs secondaires ou encore la ou les sorties de fluide orientables, ne permettent pas de faciliter la maniabilité d'un dispositif de propulsion dont le ou les groupes de poussée seraient relativement éloignés du centre de gravité ou dont l'objectif n'est pas nécessaire de transporter un ou plusieurs passagers, tel que nous allons le voir en lien avec la figure 3 qui illustre schématiquement un deuxième mode de réalisation d'un dispositif de propulsion 10. Selon un exemple de réalisation non limitatif décrit en lien avec la figure 3, un dispositif de propulsion 10 comporte une plateforme 11 avantageusement centrale, quatre groupes de poussée 12 comportant chacun un ensemble déflecteur pourvu de deux éléments déflecteurs, de tels éléments déflecteurs étant montés mobile juste en dessous de la sortie d'éjection de la tuyère du turboréacteur, en supposant un turboréacteur à orientation verticale, ces derniers étant actionnables et positionnables dans la trajectoire de sortie et/ou d'écoulement de la poussée. Lorsque lesdits éléments déflecteurs sont en configuration ouverte, la poussée induite par le turboréacteur traverse un espace laissé libre entre ces derniers, permettant ainsi au moteur de fonctionner à pleine puissance, offrant ainsi une portance verticale. Le dispositif de propulsion 10 comporte en outre des moyens supports 14 agencés pour maintenir et soutenir lesdits groupes de poussée 12. A l'instar des solutions précédemment décrites, de tels moyens 14 constituent l'équivalent fonctionnel d'un châssis soutenant la plateforme 11. Les moyens supports 14 coopèrent en outre solidairement avec ladite plateforme 11 selon une ou plusieurs liaisons mécaniques adaptées. Préférentiellement mais non limitativement, selon la figure 4, de telles liaisons mécaniques peuvent avantageusement consister en des liaisons encastrement.

Par ailleurs, à l'instar du premier mode de réalisation décrit en lien avec les figures 1 et 2, pour faciliter le décollage et l'atterrissage du dispositif de propulsion, un tel dispositif 10 comporte des moyens saillants 17, pouvant être également assimilés à un train d'atterrissage, coopérant solidairement selon des liaisons mécaniques adaptées avec la plateforme 11, éventuellement, tel que décrit en lien avec la figure 3, via les moyens supports 14, et agencés pour prévenir tout choc ou contact direct entre le sol ou, plus largement, une surface de réception dudit dispositif de propulsion, et le groupe de poussée 12 du dispositif 10. Finalement, lesdits moyens saillants 17 sont agencés pour assurer le contact entre une surface de réception et le dispositif de propulsion 10. De tels moyens saillants 17 peuvent comprendre ou consister notamment en quatre pieds de longueurs suffisantes pour que la ou les tuyères d'éjection du groupe de poussée 12 ne puissent heurter le sol et pour offrir également une certaine stabilité lorsque le dispositif est sur le sol ou sur une station de décollage, également qualifiée de surface de réception, non représentée en figures 1 et 2, afin que le passager puisse prendre efficacement position sur la plateforme 11. En variante, de tels moyens 17 pourraient consister en une paire de skis ou tous autres éléments aptes à assurer une certaine stabilité selon la nature du sol, de la surface de réception ou du support du dispositif sur lequel un tel dispositif est susceptible de se poser. En variante ou en complément, pour éviter qu'un dispositif de propulsion ne puisse heurter un obstacle durant les phases de vol, de tels moyens 17 peuvent être, pour tout ou partie, rétractables, escamotables et/ou télescopiques.

Comme mentionné précédemment, un dispositif de propulsion, tel que celui décrit, par exemple, en lien avec les figures 1 et 2 ou encore avec la figure 3, peut être avantageusement agencé ou configuré pour assurer le transport de marchandises ou encore permettre les déplacements d'un ou plusieurs passagers dans l'espace. En variante, un tel dispositif de propulsion peut consister en un drone aérien. Un drone aérien, également connu sous les terminologie et abréviation anglo-saxonnes « Unmanned Aerial Vehicle - UAV » ou « Unmanned Aerial System - UAS », est défini comme tout aéronef sans passager ni pilote embarqué apte à voler de façon autonome ou à être contrôlé à distance par une tierce personne. Les dimensions d'un drone aérien peuvent varier de quelques centimètres pour les modèles miniatures à plusieurs mètres pour les drones spécialisés, notamment dans des domaines d'application particuliers, en termes de surveillance, renseignement, combat, transport, ou loisirs. L'autonomie en vol peut être comprise entre quelques minutes à plus de dizaines d'heures pour les drones de longue endurance.

A l'instar d'un hélicoptère, un drone aérien peut, d'une manière générale, comporter un nombre non limitatif de sous-ensembles, tels que :
- un châssis consistant en la base ou le squelette du drone comportant notamment un train d'atterrissage, ledit train d'atterrissage étant plus particulièrement adapté ou agencé pour assurer le contact entre une surface de réception et le drone aérien. Généralement, les drones sont distingués par le nombre de bras qui le composent ;
- un système de propulsion, comprenant non exhaustivement un ou plusieurs moteurs sous la forme d'un ou plusieurs turboréacteurs, ou en variante ou en complément d'un ou plusieurs rotors, d'une ou plusieurs hélices assurant la production d'une force de poussée, un ou plusieurs contrôleurs de vitesses électroniques (également connus sous l'acronyme ESC) agencés pour commander les vitesses, les directions et/ou les rotations respectives des moteurs, une ou plusieurs batteries agencées pour fournir l'énergie nécessaire aux autres composants électriques pour fonctionner ;

- un contrôleur de vol agencé pour réceptionner et traiter les signaux de commandes émis par un objet électronique distant, tel que par exemple une télécommande ou radiocommande, comprenant notamment une unité de traitement, sous la forme éventuelle d'un ou plusieurs microprocesseurs ou microcalculateurs, ainsi que des moyens de communication, pour assurer le pilotage du drone depuis une station distante ;
- des moyens de capture d'images agencés pour permettre l'immersion et la prise de vue aérienne, éventuellement en temps réel, comportant notamment une caméra embarquée.

Tel que mentionné précédemment, les dispositifs de propulsion connus précédemment décrits, plus particulièrement un hélicoptère, un Flyboard Air ou encore un drone aérien, s'avèrent particulièrement avantageux puisque, au contraire des avions à voilure fixe, ils sont généralement en capacité de s'adapter pour décoller et atterrir sur des terrains non prévus à de tels décollages et/ou atterrissages. Néanmoins, les dispositifs de propulsion connus présentent un certain nombre de limites, notamment dans certaines conditions et/ou situations particulières, telles que, non limitativement, lors de l'atterrissage et/ou le décollage sur des surfaces de réception dont les dimensions sont faibles voire même relativement réduites au regard desdits dispositifs de propulsion, de telles surfaces de réception pouvant être également ou distinctement mouvantes. A titre d'exemples non limitatifs, de telles surfaces de réception peuvent consister en une embarcation nautique, un bateau ou tout autre navire : on parle alors d'amerrissage du dispositif de propulsion. De par sa présence sur une surface flottante, un tel bateau peut être soumis à différents mouvements principalement selon trois axes définis tels que :
- un axe longitudinal est défini comme un axe orienté de l'avant vers l'arrière du bateau,
- un axe vertical est défini comme un axe orienté du bas vers le haut du bateau et,
- un axe traversant est défini comme un axe orienté de tribord vers bâbord du bateau.

De tels mouvements du bateau peuvent ainsi être distingués parmi :
- le roulis (également connu sous la dénomination anglo-saxonne « roll ») consistant en un mouvement d'oscillation du bateau autour de l'axe longitudinal allant de bâbord à tribord : le bateau s'incline alternativement sur tribord et sur bâbord ;
- le cavalement (également connu sous la dénomination anglo-saxonne « surge ») consistant en un mouvement de translation d'un bateau suivant l'axe longitudinal d'avant en l'arrière : le bateau avance et recule alternativement ;
- le lacet (également connu sous la dénomination anglo-saxonne « yaw ») consistant en un mouvement de rotation sur lui-même autour de l'axe vertical : bateau effectue un mouvement de rotation sur lui-même ;
- le pilonnement (également connu sous la dénomination anglo-saxonne « heave ») consistant en un mouvement de haut en bas sur l'axe vertical : le bateau effectue un mouvement de haut en bas ;
- le tangage (également connu sous la dénomination anglo-saxonne « pitch ») consistant en un mouvement d'inclinaison périodique dans l'axe transversal du bateau vers l'avant puis vers l'arrière : le bateau oscille alternativement d'avant en arrière ;
- l'embardée (également connue sous la dénomination anglo-saxonne « sway ») consistant en un mouvement de translation sur l'axe transversal vers bâbord ou vers tribord : le bateau se déplace alternativement sur bâbord et sur tribord.

Lesdits mouvements que subit le bateau sont généralement fréquents et induits par les conditions météorologiques. En effet, lors de l'action du souffle du vent sur l'océan, une partie de l'énergie libérée est notamment transmise à la mer entraînant alors des vagues, de telles vagues étant d'autant plus grandes que le vent souffle fort et sur une longue durée. De telles vagues, éventuellement lors de leurs chocs sur la coque du bateau, peuvent ainsi occasionner des contraintes hydrostatiques et hydrodynamiques, souvent inégalement réparties. La stabilité du bateau est alors mise à rude épreuve. Une telle instabilité du bateau impacte directement le décollage et/ou l'atterrissage d'un dispositif de propulsion qui souhaiterait interagir avec le bateau ou plus généralement une surface de réception mouvante, puisque ledit dispositif de propulsion doit alors compenser ladite instabilité du bateau tout en étant lui-même dans une position relativement instable. En outre, ledit dispositif de propulsion est également soumis aux conditions météorologiques, puisque le vent, la pluie ou d'éventuels orages peuvent directement impacter la stabilité et les mouvements du dispositif de propulsion.

Par ailleurs, outre les mouvements du bateau ou de la surface de réception, les dimensions réduites dudit bateau ou de ladite surface de réception, éventuellement au regard du dispositif de propulsion, peuvent directement et également affecter le bon déroulement de l'atterrissage et/ou du décollage d'un tel dispositif de propulsion. En effet, à titre d'exemples non limitatifs, lors de l'atterrissage d'un dispositif de propulsion sous la forme d'un hélicoptère, le pilote de ce dernier positionne généralement tout d'abord un premier patin ou atterrisseur en contact avec la surface de réception, plaçant alors ledit hélicoptère dans une position relativement instable, puisque l'hélicoptère comprend un seul point de contact avec la surface de réception. Puis, le pilote doit positionner alors le deuxième patin ou atterrisseur avec la surface de réception. Lorsque ladite surface de réception est mouvante et/ou de dimensions réduites au regard du dispositif de propulsion, le pilote doit alors faire preuve de maîtrise et d'adresse de sorte à atterrir en toute sécurité : l'habileté du pilote influe directement sur le bon déroulement de l'atterrissage ou amerrissage, un tel atterrissage ou amerrissage étant généralement non reproductible et fonction du pilote de l'hélicoptère ou plus généralement du dispositif de propulsion que l'on souhaite faire atterrir ou amerrir, que le pilote soit embarqué au sein dudit dispositif ou distant de ce dernier.

Pour diminuer l'influence d'un pilote ou opérateur lors de l'amerrissage d'un dispositif de propulsion sous la forme d'un drone aérien sur le pont d'un bateau ou navire, des chercheurs ont tenté de développer de nouvelles solutions. A titre d'exemple, pour assurer l'amerrissage d'un drone aérien, une solution envisagée consiste à employer un filet tendu de dimensions relativement importantes sur le pont du navire dans lequel le drone vient entrer avant de se désactiver. Cette technologie se révèle toujours relativement complexe, puisque le navire est en mouvement constant, toujours soumis aux conditions météorologiques. Le drone aérien doit être ainsi piloté de sorte à atteindre une vitesse minimale lorsqu'il touche le filet : le pilote ou opérateur du drone aérien, quand bien même distant, doit toujours ainsi faire preuve de maîtrise et d'habileté. En outre, l'emploi d'un filet tendu sur un pont d'un navire requiert un navire de dimensions importantes pour pouvoir assurer le déploiement dudit filet. Ainsi, une telle solution sous la forme d'un filet n'est pas adaptable pour un bateau ou une surface de réception dont les dimensions sont faibles au regard de la surface projetée du dispositif de propulsion sur ledit bateau ou ladite surface de réception. Enfin, l'emploi d'un filet tendu pour réceptionner un dispositif de propulsion impose des limites quant aux dimensions et au poids dudit dispositif de propulsion puisque le matériau et la structure dudit filet utilisé doit être en capacité de supporter et résister à de tels poids et dimensions. A cet effet, les filets actuellement employés sont conçus pour supporter des dispositifs de propulsion dont le poids est limité au maximum à trente ou quarante kilogrammes. Par ailleurs, d'autres solutions employant notamment des systèmes de reconnaissance 3D, comme décrit par exemple le document US2017/0267334 A1, ont été développées pour faciliter l'atterrissage d'un drone aérien sur des terrains escarpés. De tels drones aériens déployant cette solution disposent d'un train d'atterrissage composé au moins de trois bras. Un tel agencement nécessite de trouver une position d'atterrissage appropriée pour permettre le déploiement des au moins trois bras, nécessaires au maintien de l'équilibre du drone sur le sol. À cet effet, l'atterrissage du drone ne peut se faire sur n'importe quelle zone difficile d'accès ou mouvante.

### Résumé de l'invention

L'invention permet de répondre à tout ou partie des inconvénients soulevés par les solutions connues ou précédemment mentionnées.
Parmi les nombreux avantages apportés par l'invention, nous pouvons mentionner que celle-ci permet de :
- de proposer un dispositif de propulsion modulaire et adaptable notamment pour être mis en œuvre dans tout type de dispositif de propulsion, quels que soient l'agencement, le type ou la structure du groupe de poussée compris au sein du dispositif de propulsion ;
- d'offrir un dispositif de propulsion dont l'atterrissage sur des surfaces de réception de faibles dimensions, de telles surfaces de réception pouvant être également ou distinctement mouvantes, comme par exemple, lorsque de telles surfaces sont présentes en mer, est grandement facilité et automatisé, quel que soit le niveau d'expertise de l'utilisateur ou de l'opérateur dudit dispositif de propulsion.

Selon un premier objet, il est notamment prévu un procédé de pilotage de l'atterrissage d'un dispositif de propulsion qui comporte :
- une plateforme,
- un groupe de poussée,
- des moyens supports agencés pour maintenir et soutenir ledit groupe de poussée, coopérant solidairement avec ladite plateforme selon une ou plusieurs liaisons mécaniques adaptées,
- des moyens saillants rétractables, coopérant solidairement selon des liaisons mécaniques adaptées avec la plateforme,
- des actionneurs associés aux moyens saillants et pilotables par commandes électriques, chaque actionneur étant respectivement agencé pour provoquer conjointement ou distinctement un mouvement de translation desdits moyens saillants,
- un pied central, passant par le centre d'inertie du dispositif de propulsion et coopérant solidairement selon une liaison mécanique adaptée en son extrémité proximale avec la plateforme, les moyens saillants et le pied central étant mutuellement agencés de sorte que le pied central puisse assurer le premier contact entre le dispositif de propulsion et une surface de réception dudit dispositif,
- un capteur de proximité agencé pour délivrer une mesure représentative d'une distance entre ledit capteur de proximité et la surface de réception,
- une unité de traitement conçue pour élaborer des commandes électriques d'actionneurs,
ledit procédé étant mis en œuvre par ladite unité de traitement dudit dispositif de propulsion.

Pour permettre un atterrissage dudit dispositif de
propulsion sur des surfaces de réception présentant des dimensions relativement réduites au regard du dispositif de propulsion et/ou mouvantes, un tel procédé comporte :
- une étape de collecte et de comparaison d'une première mesure de distance entre le capteur de proximité et la surface de réception délivrée par le capteur de proximité à un premier seuil prédéterminé ;
- une étape d'élaboration et de délivrance d'une commande électrique de l'actionneur associé aux moyens saillants, de sorte à provoquer les déploiements conjoints ou distincts des moyens saillants lorsque ladite première mesure de distance entre le capteur de proximité et la surface de réception atteint le premier seuil prédéterminé.

De manière avantageuse, lorsque le dispositif de propulsion dont l'unité de traitement met en œuvre un procédé selon l'invention comporte un actionneur coopérant avec le pied central, ce dernier étant rétractable et ledit actionneur étant agencé pour provoquer un mouvement de translation dudit pied central, ledit procédé peut comporter en outre deux étapes préalables à l'étape de collecte et de comparaison d'une première mesure de distance entre le capteur de proximité et la surface de réception délivrée par le capteur de proximité à un premier seuil prédéterminé :
- une étape de collecte et de comparaison d'une deuxième mesure de distance entre le capteur de proximité et la surface de réception délivrée par le capteur de proximité à un deuxième seuil prédéterminé strictement supérieur au premier seuil prédéterminé ;
- une étape d'élaboration et de délivrance d'une commande électrique de l'actionneur associé au pied central lorsque ladite deuxième mesure de distance atteint le deuxième seuil prédéterminé, de sorte à provoquer le déploiement dudit pied central.

L'invention prévoit en outre un mode de réalisation avantageux selon lequel l'étape d'élaboration et délivrance d'une commande électrique de l'actionneur associé aux moyens saillants, de sorte à provoquer les déploiements conjoints ou distincts des moyens saillants, peut comporter trois sous-étapes, dans le cas d'un déploiement distinct des moyens saillants, consistant en :
- une première sous-étape d'élaboration et de délivrance d'une commande électrique de l'actionneur associé à un premier moyen saillant, de sorte à provoquer le déploiement dudit premier moyen saillant ;
- une deuxième sous-étape d'élaboration et de délivrance d'une commande électrique de l'actionneur associé à un deuxième moyen saillant, de sorte à provoquer le déploiement dudit deuxième moyen saillant ;
- une troisième sous-étape d'élaboration et de délivrer des commandes électriques des actionneurs associés à un troisième moyen saillant et à un quatrième moyen saillant, de sorte à provoquer les déploiements respectifs desdits troisième et quatrième moyens saillants.

Pour améliorer la maîtrise de l'atterrissage d'un dispositif de propulsion conforme à l'invention, en fournissant un effet « ventouse » ou aspirant, lorsque le dispositif de propulsion dont l'unité de traitement met en œuvre un procédé conforme à l'invention comporte en outre des moyens de commande du groupe de poussée, ledit procédé peut comporter, de manière subséquente voire conjointe à l'étape d'élaboration et de délivrance d'une commande électrique de l'actionneur associé aux moyens saillants, une étape d'élaboration et de délivrance d'une commande des moyens de commande du groupe de poussée, de sorte à produire une rétro-poussée stabilisatrice lorsque ladite première mesure de distance atteint le premier seuil prédéterminé.

De manière avantageuse, lorsque les moyens saillants sont déployés et stabilisés au contact de la surface de réception, un procédé selon l'invention peut comporter une étape d'élaboration et de délivrance d'une commande électrique de l'actionneur associé au pied central, de sorte à autoriser le repli dudit pied central.

En variante ou en complément, à la fin de l'atterrissage du dispositif de propulsion, un procédé selon l'invention peut comporter une étape d'élaboration et de délivrance d'une commande des moyens de commande du groupe de poussée, de sorte à provoquer l'extinction dudit groupe de poussée lorsque les moyens saillants sont déployés et stabilisés au contact de la surface de réception.

Selon un deuxième objet, il est également prévu un dispositif de propulsion comportant une unité de traitement et étant agencé de sorte que ladite unité de traitement élabore des commandes électriques d'actionneurs selon un procédé de pilotage conforme à l'invention.

Afin de répondre à un grand nombre d'applications, la plateforme d'un tel dispositif peut être agencée pour accueillir un ou plusieurs passagers.

De manière avantageuse mais non limitative, le groupe de poussée d'un dispositif de propulsion selon l'invention peut être agencé pour fournir une force de poussée résultante orientée selon une direction de sorte à fournir une capacité de décollage et d'atterrissage sensiblement verticaux.

Lorsque l'interaction d'un utilisateur ou d'un opérateur est nécessaire pour le pilotage ou plus particulièrement l'atterrissage d'un dispositif de propulsion conforme à l'invention, ce dernier peut comporter une interface Homme-Machine d'entrée conçue pour traduire une gestuelle d'un utilisateur en une consigne d'actionnement du pied central et/ou des moyens saillants ou de pilotage du groupe de poussée.

Préférentiellement mais non limitativement, selon l'agencement de dispositif de propulsion ou la nature de l'application à laquelle doit répondre le dispositif de propulsion, les moyens saillants peuvent comprendre quatre pieds périphériques ou deux patins d'atterrissage.

### Brève Description des figures

D'autres caractéristiques et avantages apparaîtront plus clairement à la lecture de la description qui suit et à l'examen des figures qui l'accompagnent parmi lesquelles :
La figure 1, précédemment décrite, illustre schématiquement un premier mode de réalisation d'un dispositif de propulsion connu ;
La figure 2, précédemment décrite, présente une vue éclatée du premier mode de réalisation d'un dispositif de propulsion connu ;
La figure 3, précédemment décrite, présente une vue en perspective d'un deuxième mode de réalisation d'un dispositif de propulsion connu ;
La figure 4 illustre schématiquement un mode de réalisation non limitatif d'un dispositif de propulsion conforme à l'invention ;
La figure 5A présente une première vue de face d'un mode de réalisation non limitatif d'un dispositif de propulsion conforme à l'invention, lors de la mise en œuvre d'une étape d'un procédé de pilotage de l'atterrissage dudit dispositif de propulsion ;
La figure 5B présente une deuxième vue de face d'un mode de réalisation non limitatif d'un dispositif de propulsion conforme à l'invention, lors de la mise en œuvre d'une étape subséquente d'un procédé de pilotage de l'atterrissage dudit dispositif de propulsion ;
La figure 5C illustre schématiquement une troisième vue de face d'un mode de réalisation non limitatif d'un dispositif de propulsion conforme à l'invention, lors de la mise en œuvre d'une étape subséquente d'un procédé de pilotage de l'atterrissage dudit dispositif de propulsion ;
La figure 5D illustre schématiquement une quatrième vue de face d'un mode de réalisation non limitatif d'un dispositif de propulsion conforme à l'invention, lors de la mise en œuvre d'une étape subséquente d'un procédé de pilotage de l'atterrissage dudit dispositif de propulsion ;
La figure 5E illustre schématiquement une cinquième vue de face d'un mode de réalisation non limitatif d'un dispositif de propulsion conforme à l'invention, lors de la mise en œuvre d'une étape subséquente d'un procédé de pilotage de l'atterrissage dudit dispositif de propulsion ;
La figure 6 présente schématiquement un organigramme d'un mode de réalisation non limitatif d'un procédé de pilotage de l'atterrissage d'un dispositif de propulsion conforme à l'invention.

### Description détaillée

Un dispositif de propulsion conforme à l'invention sera décrit, dans la suite du document, dans le cadre d'une application avec un dispositif de propulsion dédié à évoluer dans les airs, également qualifié d'aéronef ou aérodyne, un tel dispositif de propulsion étant agencé pour fournir une capacité de décollage et d'atterrissage sensiblement verticaux. Un tel dispositif de propulsion peut éventuellement être agencé pour transporter un ou plusieurs passagers et/ou des marchandises. A titre d'exemples non limitatifs, un tel dispositif de propulsion peut consister en un drone, un hélicoptère ou un « Flyboard air ». L'invention ne saurait toutefois être limitée à ces seuls exemples d'application et pourrait être en lieu et place être employée en lien avec tout type de dispositif de propulsion.

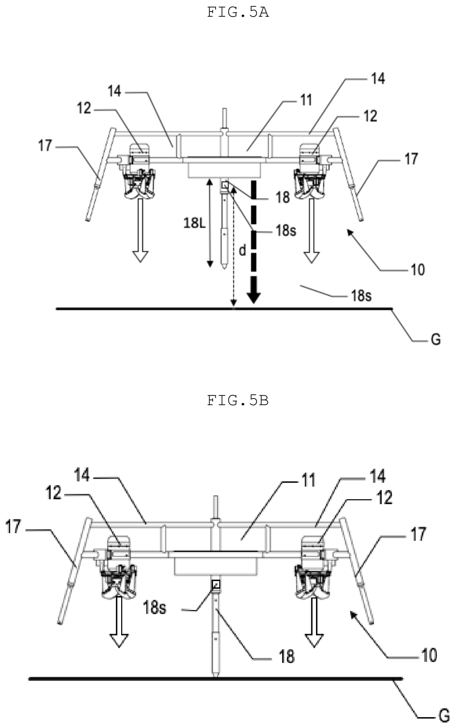

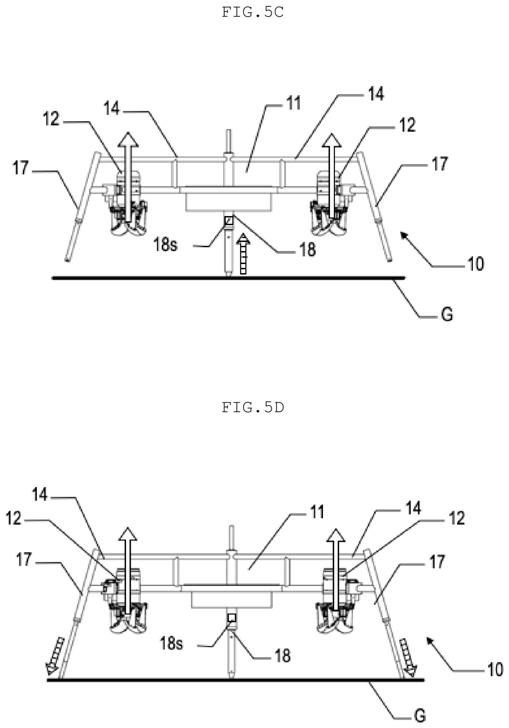

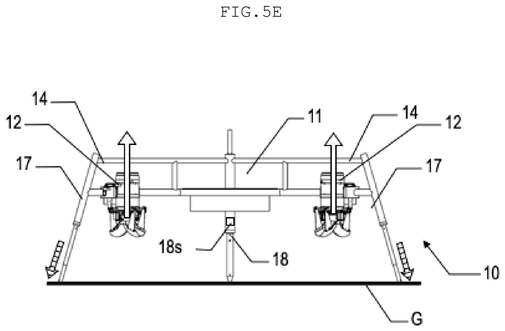

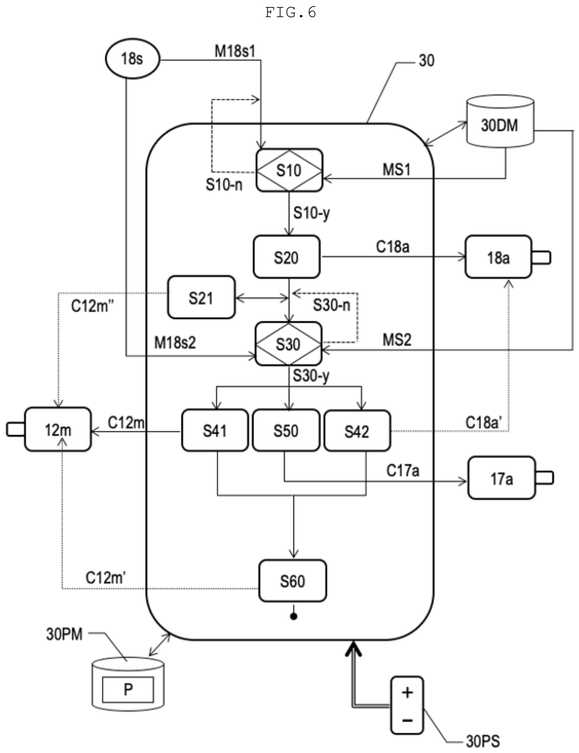

La figure 4 et les figures 5A à 5E présentent différentes vues d'un mode de réalisation non limitatif d'un dispositif de propulsion conforme à l'invention. Plus particulièrement, les figures 5A à 5E illustrent schématiquement différentes vues d'un mode de réalisation non limitatif d'un dispositif de propulsion conforme à l'invention, respectivement durant les différentes phases ou étapes d'un atterrissage dudit dispositif de propulsion, un tel atterrissage pouvant être directement opéré au moyen d'un procédé de pilotage de l'atterrissage d'un tel dispositif de propulsion, dont un exemple non limitatif sera décrit ultérieurement en lien avec la figure 6.

Selon les figures 4 et 5A à 5E, un dispositif de propulsion 10 comporte un corps principal sous la forme principalement d'une plateforme 11 sur laquelle un passager peut éventuellement prendre place. Selon les dimensions de la plateforme 11 et la puissance du groupe de poussée 12 du dispositif 10, plusieurs passagers peuvent éventuellement prendre position simultanément sur ladite plateforme 11. La plateforme 11 peut présenter, à ce titre, une ou plusieurs plages 11 agencées pour accueillir et/ou maintenir le ou les passagers sur la plateforme, par le biais, par exemple de ses ou leurs pieds ou encore chaussures.

En variante, selon le type de dispositif de propulsion, tel que par exemple un hélicoptère, l'invention prévoit que la plateforme puisse comprendre en un fuselage consistant en la carcasse ou cabine de l'hélicoptère au sein duquel un ou plusieurs passagers et/ou (co-)pilotes peuvent prendre place. En variante ou en complément, ladite plateforme peut également être agencée ou adaptée pour assurer le transport de marchandises ou de frets, conjointement ou distinctement du ou des passagers qui peuvent prendre éventuellement place sur ladite plateforme. Plus largement, une telle plateforme permet d'assurer l'assemblage et le maintien de tous les éléments composant le dispositif de propulsion. Toutefois, l'invention ne saurait être limitée à ces seuls exemples de plateforme. Ainsi, tout moyen ou objet, quels que soient sa forme, ses dimensions, sa composition et/ou son agencement, apte à assurer une fonction similaire pourrait être employé pour constituer la plateforme 11 d'un dispositif de propulsion 10 conforme à l'invention.

Un dispositif de propulsion comporte un groupe de poussée 12. Au sens de l'invention et dans tout le document, on entend par « groupe de poussée » (« thrust unit » selon une terminologie anglo-saxonne), également désigné par la dénomination « propulseur », tout appareil ou objet agencé pour créer une force, qualifiée de « poussée », une telle poussée résultant de l'accélération d'une masse d'air en sens opposé du déplacement de celui-ci. Selon la configuration du dispositif de propulsion, le groupe de poussée peut présenter divers agencements et formes. Lorsqu'un dispositif de propulsion conforme à l'invention consiste en un hélicoptère par exemple, le groupe de poussée de ce dernier peut comprendre une voilure, comprenant un ou plusieurs hélices ou rotors sustentateurs et/ou anti couple, une telle voilure étant commandée ou actionnée par un groupe motopropulseur, généralement constitué d'un moteur à pistons ou d'une ou plusieurs turbines coopérant avantageusement avec la voilure et permettant l'entraînement des rotors compris au sein de la voilure. En variante, lorsque le dispositif de propulsion consiste en un « Flyboard Air », le groupe de poussée de ce dernier peut consister en tout appareil de propulsion, couramment exploité en aéronautique, qui transforme l'énergie potentielle contenue dans un carburant, par exemple du kérosène ou équivalent, associé à un comburant, en l'occurrence l'air ambiant aspiré par une entrée de fluide du corps, en énergie cinétique. Cette énergie cinétique génère une force de réaction en milieu élastique, dans le sens opposé à l'éjection d'un rejet gazeux. Il en résulte une accélération d'une certaine quantité d'air entre l'entrée de fluide du propulseur ou groupe de poussée et la tuyère d'éjection de ce dernier, produisant une poussée par détente dans ladite tuyère d'éjection. Un tel propulseur utilise généralement un compresseur d'air à aubes ou rotors. Tout autre type de carburant pourrait éventuellement être utilisé en lieu et place du kérosène évoqué précédemment. En variante ou en complément, le groupe de poussée d'un tel dispositif de propulsion peut consister avantageusement en une paire de sous-groupes de poussée 12a et 12b comprenant chacun deux propulseurs.

De manière préférée mais non limitative, selon l'exemple de réalisation décrit en lien avec les figures 4 et 5A à 5E, un dispositif de propulsion 10 conforme à l'invention peut comporter quatre groupes de poussée 12. Chacun des groupes de poussée peut éventuellement comprendre un ensemble déflecteur pourvu de deux éléments déflecteurs, de tels éléments déflecteurs étant montés mobiles juste en aval de la sortie d'éjection de la tuyère du turboréacteur, en supposant un turboréacteur à orientation verticale, ces derniers étant actionnables et positionnables dans la trajectoire de sortie et/ou d'écoulement de la poussée, de sorte à contrôler la force de poussée délivrée par chacun des groupes de poussée. L'exemple de configuration décrit en liaison avec les figures 4 et 5A à 5, bien que ne limitant pas l'invention, présente des qualités certaines au regard d'autres configurations de groupe de poussée. En effet, un dispositif 10 pourrait évoluer avec un groupe de poussée réduit à un seul propulseur, par exemple de type turboréacteur thermique. Toutefois, cette configuration présenterait un encombrement trop imposant pour permettre audit dispositif de propulsion de pouvoir évoluer et être piloté aisément. En effet, la longueur d'un tel propulseur unique, afin que ce dernier soit en mesure de délivrer une poussée suffisante pour propulser dans l'air le dispositif 10 et son passager éventuel, serait de l'ordre d'un mètre, voire plus. De la même manière, un dispositif de propulsion comportant deux groupes de poussée ne s'avère par réellement satisfaisant : l'encombrement de chaque groupe de poussée serait certes réduit, mais le dispositif de propulsion conserverait un inconvénient majeur en termes de sécurité, à l'instar de la configuration mono-propulseur précédemment exprimée. En effet, si l'un des deux groupes de poussée venait à dysfonctionner, la poussée totale du groupe serait insuffisante pour maintenir le dispositif de propulsion dans les airs et pour conserver une manœuvrabilité suffisante. Contrairement à ces deux configurations possibles, une configuration, telle qu'illustrée en liaison avec les figures 4 et 5A à 5E, selon laquelle un dispositif de propulsion comporte quatre groupes de poussée, offre un compromis particulièrement intéressant. Ainsi, l'encombrement occasionné par les quatre propulseurs, par exemple des réacteurs, demeure tout à fait compatible avec les modalités d'utilisation recherchées. D'autre part, le dispositif de propulsion 10 demeure parfaitement manœuvrable, quand bien même l'un des propulseurs venait à dysfonctionner. Selon l'exemple de réalisation préféré mais non limitatif d'un dispositif de propulsion, le groupe de poussée de ce dernier peut être agencé pour fournir une force de poussée résultante orientée selon une direction de sorte à fournir une capacité de décollage et d'atterrissage sensiblement verticaux. L'invention ne saurait toutefois être limitée au nombre, au type ou à l'agencement du ou des groupes de poussée présents au sein du dispositif de propulsion.

Les figures 4 et 5A à 5E ne décrivent pas la majorité des éléments électroniques par mesures de simplification. A titre d'exemple, comme nous le verrons dans la description du groupe de poussée 12 en liaison avec la figure 6, pour permettre le fonctionnement du ou des groupes de poussée 12 présents au sein dudit dispositif de propulsion 10, ce dernier comprend également des moyens de commande 12m coopérant avec le ou lesdits groupes de poussée 12. De tels moyens de commande 12m peuvent être notamment agencés pour piloter la puissance dudit groupe de poussée. Par ailleurs, de tels moyens de commande peuvent en outre coopérer ou comporter des capteurs, tels que de manière non exhaustive un inclinomètre, un accéléromètre et/ou un gyroscope, aptes à délivrer des informations en lien avec l'assiette ou plus généralement la trajectoire du dispositif 10 de propulsion. Lesdits moyens de commande peuvent être ainsi agencés pour élaborer des commandes de puissance ou de pilotage d'un groupe de poussée 12, selon les consignes d'un passager ou d'un opérateur distant transmises au travers d'une interface Homme-Machine d'entrée 40, ou autrement nommée interface Homme-Machine de consigne 40 dans la présente description, telle qu'une télécommande comportant des boutons ou un écran tactile, un microphone, ou autres moyens techniques permettant de traduire une gestuelle ou une parole d'un humain en un signe ou une donnée numérique, et/ou des informations ou données produites par de tels capteurs. De tels moyens de commande peuvent se traduire sous la forme d'une ou plusieurs cartes électroniques, avantageusement positionnées à proximité du centre d'inertie du dispositif de propulsion 10, notamment si les capteurs sont compris dans ladite ou lesdites cartes électroniques.

Selon les figures 4 et 5A à 5E, un dispositif de propulsion conforme à l'invention comporte des moyens supports 14 agencés pour maintenir et soutenir le ou lesdits groupes de poussée 12. A l'instar des solutions précédemment décrites, de tels moyens 14 constituent l'équivalent fonctionnel d'un châssis soutenant la plateforme 11. Les moyens supports 14 coopèrent solidairement avec ladite plateforme 11 selon une ou plusieurs liaisons mécaniques adaptées, mais également avec le ou les groupes de poussée présents au sein dudit dispositif de propulsion 10. Préférentiellement mais non limitativement, selon les figures 4 et 5A à 5E, de telles liaisons mécaniques peuvent avantageusement consister en des liaisons encastrement. A titre d'exemple préféré mais non limitatif, selon les figures 4 et 5A à 5E, les moyens supports 14 d'un tel dispositif de propulsion 10 conforme à l'invention peuvent consister avantageusement en une structure tubulaire comportant une pluralité de tubes et/ou de poutres, avantageusement creux pour en diminuer le poids. Le rôle de ladite structure 14 consiste à matérialiser une ossature ou un squelette du dispositif de propulsion 10. Le ou les matériaux utilisables pour constituer une telle structure 14 peuvent être sélectionnés parmi l'aluminium, un alliage inoxydable, ou encore des fibres de carbone ou tous autres polymères adaptés, c'est-à-dire, plus généralement, tout matériau présentant des caractéristiques fonctionnelles privilégiant légèreté et robustesse.

Par ailleurs, pour faciliter le décollage et l'atterrissage du dispositif de propulsion, un dispositif 10 conforme à l'invention comporte des moyens saillants 17, pouvant être également assimilés à un train d'atterrissage, coopérant solidairement selon des liaisons mécaniques adaptées avec la plateforme 11 et agencés pour prévenir tout choc ou contact direct entre le sol ou plus largement une surface de réception et un groupe de poussée 12 du dispositif 10, lorsque ce dernier est positionné en dessous de la plateforme 11, tel que décrit notamment en lien avec les figures 4 et 5A à 5E, lors de l'atterrissage et/ou le décollage de ce dernier. Finalement, lesdits moyens saillants 17 sont agencés pour assurer le contact entre une surface de réception G et le dispositif de propulsion 10.

De tels moyens 17 peuvent comprendre ou consister notamment en quatre pieds. Chaque moyen saillant 17 présente une extrémité dite « proximale » représentant la partie du pied la plus proche de la plateforme 11, et une extrémité dite « distale » représentant la partie du pied la plus éloignée de la plateforme 11 et la plus proche de la surface de réception G. La distance entre son extrémité proximale et son extrémité distale est nommée, dans le reste de la présente description, la longueur 17L de chaque moyen saillant 17. Ces moyens saillants 17 sous forme de pieds présentent des longueurs respectives suffisantes pour que le ou les groupes de poussée 12 ne puissent heurter le sol et éventuellement endommager les groupes de poussée, et pour offrir également une certaine stabilité, lorsque le dispositif est positionné sur le sol ou, plus généralement, sur une surface de réception, telle qu'une station de décollage. Selon les figures 4 et 5A à 5E, la plateforme présentant une forme sensiblement carrée ou rectangulaire, lesdits quatre pieds peuvent avantageusement être positionnés en périphérie, plus particulièrement mais non limitativement, aux quatre coins de la plateforme. En variante, de tels moyens saillants 17 pourraient consister en une paire de skis ou tous autres éléments aptes à assurer une certaine stabilité selon la nature du sol ou du support du dispositif sur lequel un tel dispositif est susceptible de se poser. Également, selon le type de dispositif de propulsion, les moyens saillants 17 peuvent comprendre deux patins d'atterrissage, comme ceux couramment employés aujourd'hui en lien avec les hélicoptères.

En variante ou en complément, pour éviter qu'un dispositif de propulsion ne puisse heurter un obstacle durant les phases de vol, de tels moyens saillants 17 peuvent être, pour tout ou partie, rétractables, escamotables et/ou télescopiques, permettant ainsi de modifier les dimensions, notamment mais non limitativement la longueur ou la hauteur, des moyens saillants 17. A titre d'exemples non limitatifs, selon les figures 4 et 5A à 5E, les moyens saillants 17, sous la forme de quatre pieds éventuellement périphériques, peuvent consister en quatre colonnes télescopiques. Quels que soient les agencements des moyens saillants 17, lorsque ceux-ci sont pour tout ou partie, rétractables, escamotables et/ou télescopiques, pour modifier les dimensions des moyens saillants 17, un dispositif de propulsion 10 conforme à l'invention peut comporter des actionneurs 17a coopérant respectivement avec les moyens saillants 17, chaque actionneur 17a étant respectivement agencé pour provoquer conjointement ou distinctement un mouvement de translation desdits moyens saillants 17. A titre d'exemples non limitatifs, selon les figures 4 et 5A à 5E, lorsque les moyens saillants 17 consistent en quatre pieds périphériques sous la forme de colonnes télescopiques, de tels actionneurs 17a peuvent consister en quatre vérins ou actionneurs linéaires.

Comme nous le verrons ultérieurement, lesdits actionneurs 17a peuvent être pilotés par une unité de traitement 30, représentée schématiquement en pointillés, sur les figures 4 et 5A, chargée d'assurer une maîtrise totale de l'assiette et des trajectoires du dispositif de propulsion 10, plus particulièrement de l'atterrissage du dispositif de propulsion sur une surface de réception G mouvante et/ou dont les dimensions peuvent être relativement réduites ou faibles, c'est-à-dire de l'ordre de l'encombrement de la surface projetée dudit dispositif de propulsion 10 sur la surface de réception G, également qualifiée d' « emprise au sol », par une exploitation conjointe de consignes de pilotage et de mesures émanant de capteurs. A ce titre, chaque actionneur 17a, ou plus généralement chaque moyen saillant 17, peut être associé à un capteur, non représenté sur les figures, tel qu'un capteur de proximité, chargé de délivrer à ladite unité de traitement 30, une représentation numérique ou analogique d'une mesure d'une distance entre ledit capteur de proximité coopérant avec l'actionneur ou plus largement le moyen saillant et une surface de réception G. Un tel capteur peut être fondé sur des détections optiques, par exemple au moyen de diodes laser infrarouges, ultrasoniques ou encore inductives : le capteur est alors avantageusement sans contact. A titre d'exemples non limitatifs, un tel capteur peut comprendre ou consister en un capteur à courants de Foucault ou à ultrasons, un capteur laser, capacitif, inductif ou optoélectronique. En variante, l'invention prévoit qu'un tel capteur puisse être avantageusement fondé sur une détection de contact : un tel capteur peut alors comprendre ou consister en une jauge de contrainte ou déformation, une sonde à pression, telle un piézomètre, ou encore un capteur de fin de course. Le choix d'un type de capteur particulier au regard d'un autre peut principalement dépendre du type, de l'agencement ou encore des dimensions du dispositif de propulsion 10 que l'on souhaite équiper. L'invention ne saurait toutefois être limitée à ces seuls exemples de capteurs. Tout moyen ou objet permettant de réaliser une mesure de distance ou de contact entre ledit capteur et une surface de réception pourrait être employé. L'invention prévoit en outre l'emploi d'une pluralité de capteurs de proximité en fonction de la structure du dispositif de propulsion 10. Par ailleurs, une telle unité de traitement 30 peut en outre piloter les moyens de commande 12m du ou des groupes de poussée pour réguler la force de poussée délivrée par le ou les groupes de poussée 12 présents au sein du dispositif de propulsion.

Pour permettre un atterrissage d'un dispositif de propulsion 10 conforme à l'invention maîtrisé et optimisé, ce dernier comporte en outre un capteur de proximité 18s agencé pour délivrer une mesure M18s1, M18s2 représentative d'une distance d entre ledit capteur de proximité 18s et la surface de réception G sur laquelle un dispositif de propulsion 10 conforme à l'invention souhaite atterrir ou éventuellement amerrir. L'emploi dudit capteur de proximité 18s en lien avec un dispositif de propulsion 10 conforme à l'invention s'avère particulièrement avantageux, puisqu'il permet de mieux appréhender, éventuellement en temps réel, la distance entre le dispositif de propulsion 10 et une surface de réception G, notamment lorsqu'une telle surface de réception G est mouvante et/ou de faibles dimensions. Or, comme mentionné précédemment, à l'heure actuelle, lorsque ladite surface de réception est mouvante et/ou de faibles dimensions, le pilote ou plus largement l'opérateur du dispositif de propulsion doit alors faire preuve de maîtrise et d'adresse de sorte à atterrir ou amerrir en toute sécurité : l'habileté du pilote influe directement sur le bon déroulement de l'atterrissage ou amerrissage, un tel atterrissage ou amerrissage étant généralement non reproductible et fonction du pilote du dispositif de propulsion que l'on souhaite faire atterrir ou amerrir, que le pilote soit embarqué au sein dudit dispositif ou distant de ce dernier : la présence d'un tel capteur vise à réduire l'influence de l'habileté du pilote ou de l'opérateur sur le bon déroulement de l'atterrissage ou de l'amerrissage.

Un tel capteur de proximité 18s peut être fondé sur des détections optiques, par exemple au moyen de diodes laser infrarouges, ultrasoniques ou encore inductives : le capteur est alors avantageusement sans contact. A titre d'exemples non limitatifs, un tel capteur de proximité 18s peut comprendre ou consister en un capteur à courants de Foucault ou à ultrasons, un capteur laser, capacitif, inductif ou optoélectronique. En variante, l'invention prévoit qu'un tel capteur de proximité 18s puisse être avantageusement fondé sur une détection de contact : un tel capteur peut alors comprendre ou consister en une jauge de contrainte ou déformation, une sonde à pression, telle un piézomètre, ou encore un capteur de fin de course. Le choix d'un type de capteur particulier au regard d'un autre peut principalement dépendre du type, de l'agencement ou encore des dimensions du dispositif de propulsion 10 que l'on souhaite équiper. L'invention ne saurait toutefois être limitée à ces seuls exemples de capteurs. Tout moyen ou objet permettant de réaliser une mesure de distance ou de contact entre ledit capteur et une surface de réception pourrait être employé.

Généralement, ledit capteur de proximité 18s est embarqué au sein dudit dispositif de propulsion et en conséquence coopère solidairement avec un élément du dispositif de propulsion 10, tel que par exemple, la plateforme 11, les moyens supports 14 ou les moyens saillants 17, selon une liaison mécanique adaptée. Préférentiellement mais non limitativement, pour assurer une mesure de distance d entre le capteur de proximité 18s et la surface de réception G la plus précise possible, la liaison mécanique entre ces deux éléments peut avantageusement consister en une liaison encastrement : le capteur de proximité 18s peut ainsi être fixé à l'aide de tout moyen de fixation adapté au dispositif de propulsion. En variante ou en complément, l'invention prévoit que le capteur de proximité 18s puisse être positionné au plus près du centre d'inertie ou du centre de gravité, les deux centres étant, dans l'atmosphère, confondus, du dispositif de propulsion 10. Selon les figures 4 et 5A à 5E, le capteur de proximité 18s peut avantageusement coopérer avec la face inférieure de la plateforme 11.

Comme mentionné précédemment, l'un des objectifs de l'invention consiste à proposer un dispositif de propulsion dont l'atterrissage ou l'amerrissage sur une surface de réception G mouvante et/ou de faibles dimensions est grandement facilité et/ou optimisé. L'un des obstacles principaux, lors d'un tel atterrissage ou amerrissage, réside dans la difficulté de trouver un bon compromis entre le contact du dispositif de propulsion avec la surface de réception G et la stabilité nécessaire pour maintenir l'équilibre dudit dispositif de propulsion au regard de la surface de réception G. Pour pallier cet inconvénient, un dispositif de propulsion 10 conforme à l'invention peut en outre comporter un pied central 18 coopérant solidairement selon une liaison mécanique adaptée en son extrémité proximale avec la plateforme 11, plus particulièrement la face inférieure. Au sens de l'invention et dans tout le document, on entend par « pied central », un corps sensiblement longitudinal ou longiligne, rigide ou flexible, l'axe longitudinal du pied central passant sensiblement par le centre d'inertie du dispositif de propulsion. Un tel pied central 18 présente une extrémité dite « proximale » représentant la partie du pied central 18 la plus proche de la plateforme 11, et un extrémité dite « distale » représentant la partie du pied central 18 la plus éloignée de la plateforme 11 et la plus proche de la surface de réception G. La distance entre son extrémité proximale et son extrémité distale est nommée, dans le reste de la présente description, la longueur 18L du pied central 18. La longueur 18L dudit pied central 18 est supérieure à la longueur 17L de chaque moyen saillant 17 ou, lorsqu'ils sont positionnés en dessous de la plateforme 11, à celle du ou des groupes de poussée 12. L'emploi d'un tel pied central 18, dont la longueur 18L est supérieure à celle des autres éléments du dispositif de propulsion 10, s'avère particulièrement avantageux, puisque cela lui permet d'assurer le « premier » contact entre le dispositif de propulsion 10 et la surface de réception G sur laquelle le dispositif est supposé atterrir, permettant ainsi d'améliorer la maîtrise de l'atterrissage ou de l'amerrissage.

En variante ou en complément, afin d'atténuer l'effet du choc ou du contact entre le dispositif de propulsion 10 et la surface de réception lors de l'atterrissage ou de l'amerrissage dudit dispositif 10, le pied central 18 peut, en son extrémité distale, comporter ou coopérer solidairement avec un objet ou matériau amortisseur, non représenté sur les figures à des fins de simplification. A titre d'exemples non limitatifs, un tel amortisseur peut consister en un morceau d'un matériau souple, tel que du caoutchouc, du polyuréthane, agencé pour coopérer solidairement selon une liaison encastrement avec l'extrémité distale du pied central 18. En variante ou en complément, un tel amortisseur peut comprendre un amortisseur de chocs, un amortisseur hydraulique à ressort ou à palettes ou encore un amortisseur pneumatique. L'invention ne saurait être limitée au type d'amortisseur coopérant avec le pied central. Préférentiellement mais non limitativement, l'invention prévoit que le pied central puisse également coopérer selon toute liaison mécanique adaptée avec ladite plateforme 11 : le type de liaison mécanique assurant la coopération entre la plateforme 11 et le pied central 18 dépendra principalement de l'agencement et des dimensions du pied central 18.

Comme mentionné précédemment, pour permettre un atterrissage maîtrisé et optimisé d'un dispositif de propulsion 10 conforme à l'invention, ce dernier peut comporter en outre un capteur de proximité 18s agencé pour délivrer une mesure M18s1, M18s2 représentative d'une distance d entre ledit capteur de proximité 18s et la surface de réception G sur laquelle un dispositif de propulsion 10 conforme à l'invention souhaite atterrir ou éventuellement amerrir. Comme mentionné précédemment également, lorsque la surface de réception G prévue pour l'atterrissage ou l'amerrissage est mouvante ou de faibles dimensions, une des difficultés consiste à viser correctement la surface de réception G, tout en assurant un atterrissage ou amerrissage maîtrisé, c'est-à-dire notamment, n'engendrant pas de déplacement latéral du dispositif de propulsion 10, ce dernier étant alors susceptible de « rater » ou de glisser de la surface de réception ou d'heurter des objets ou infrastructures tiers. Pour ce faire, le capteur de proximité 18s peut coopérer solidairement selon une liaison mécanique adaptée, préférentiellement mais non limitativement une liaison encastrement, éventuellement réversible, avec le pied central 18. La coopération entre le capteur de proximité 18s et le pied central 18 s'avère particulièrement avantageuse, le capteur permettant de mesurer précisément et en temps réel la distance entre la surface de réception G et le pied central qui assure le premier contact avec la surface de réception G.

Par ailleurs, la position du capteur de proximité 18s au regard du pied central 18 dépend de différents facteurs, plus particulièrement :
- de l'agencement et/ou du type de capteur 18s employé : la détection de contact, par exemple lors de l'emploi d'un capteur de fin de course, d'une jauge de déformation ou d'un piézomètre, impose un positionnement et une coopération du capteur de proximité 18 avec l'extrémité distale du pied central 18, une telle extrémité distale étant destinée à assurer le « premier » contact entre la surface de réception G et le pied central. Par opposition, l'emploi d'un capteur sans contact, tel qu'un capteur laser, permet de positionner ledit capteur tout le long du pied central, le capteur laser présentant une large portée de détection allant jusqu'à plusieurs mètres. En variante, les capteurs capacitifs ou inductifs étant généralement de plus courte portée, de tels capteurs peuvent être positionnés aux abords de l'extrémité distale ;
- de la structure et de la composition du pied central 18, le pied central pouvant présenter une structure relativement rigide ou relativement flexible. A titre d'exemples non limitatifs, selon les figures 4 et 5A à 5E, le pied central consistant en une colonne télescopique et ainsi présentant une structure relativement rigide, le capteur de proximité 18s, sous la forme avantageuse mais non limitative d'un capteur laser, peut coopérer avec ledit pied central 18 aux abords de son extrémité proximale et de la face inférieure de la plateforme 11.

En variante ou en complément, pour éviter qu'un dispositif de propulsion ne puisse heurter un obstacle durant les phases de vol, un tel pied central 18 peut être, pour tout ou partie, rétractable, escamotable et/ou télescopique, permettant ainsi de modifier les dimensions, notamment mais non limitativement la longueur ou la hauteur, dudit pied central. A titre d'exemples non limitatifs, selon les figures 4 et 5A à 5E, un tel pied central 18 peut avantageusement consister en une colonne télescopique. Quel que soit l'agencement du pied central 18, lorsque celui-ci est pour tout ou partie, rétractable, escamotable et/ou télescopique, pour modifier les dimensions du pied central, un dispositif de propulsion 10 conforme à l'invention peut comporter un actionneur 18a coopérant avec le pied central, l'actionneur 18a étant agencé pour provoquer un mouvement de translation dudit pied central 18 ou d'une manière générale, provoquer le déploiement du pied central 18. A titre d'exemples non limitatifs, selon les figures 4 et 5A à 5E, lorsque le pied central 18 consiste en une colonne télescopique, un tel actionneur 18a peut consister en un vérin ou actionneur linéaire.

A l'instar des actionneurs 17a des moyens saillants 17, comme nous le verrons ultérieurement, ledit actionneur 18a peut être piloté par l'unité de traitement 30 d'un dispositif de propulsion 10 conforme à l'invention, chargée d'assurer une maîtrise totale de l'assiette et des trajectoires du dispositif de propulsion 10, plus particulièrement de l'atterrissage du dispositif de propulsion sur une surface de réception G mouvante et/ou de faibles dimensions, par une exploitation conjointe de consignes de pilotage, via l'exploitation de l'interface Homme-Machine d'entrée 40, et de mesures émanant de capteurs.

Plus particulièrement, nous verrons ultérieurement que les actionneurs 18a, 17a, respectivement associés au pied central 18 ou aux moyens saillants 17, peuvent être pilotés par commandes électriques C17a, C18, C18a', l'unité de traitement 30 dudit dispositif de propulsion 10 étant conçue pour élaborer lesdites commandes électriques C17a, C18, C18a' à partir d'une consigne de pilotage et/ou d'un référentiel déterminé MS1, MS2 par un ou plusieurs paramètres de configuration. De tels paramètres de configuration peuvent être préalablement déterminés en amont de l'utilisation du dispositif de propulsion.

En variante ou en complément, pour permettre à un passager 1, lorsqu'un dispositif de propulsion 10 conforme à l'invention est destiné à assurer le transport d'un ou plusieurs passagers, ou plus largement un opérateur dudit dispositif, d'interagir avec un groupe de poussée 12 ou tout autre organe dudit dispositif 10, ce dernier peut comporter ou coopérer avec une interface Homme-Machine de consigne 40, de type télécommande par exemple, dont la fonction première est de traduire une gestuelle dudit passager 1 ou opérateur en une consigne déterminée. Plus particulièrement, une telle interface Homme-Machine de consigne 40 peut être notamment conçue pour traduire une gestuelle d'un utilisateur en une consigne d'actionnement du pied central 18 et/ou des moyens saillants 17 ou encore de pilotage du ou des groupes de poussée 12. Une telle interface Homme-Machine de consigne 40 sous la forme d'une télécommande peut être agencée pour être tenue dans la main du passager 1 ou plus largement de l'opérateur ou utilisateur : ladite télécommande peut avantageusement être distante. A titre d'exemple non limitatif, ladite interface 40 peut s'apparenter à une télécommande de type pistolet, comportant notamment une gâchette dont la course peut être interprétée comme une consigne d'augmentation de la puissance du groupe de poussée 12, lorsque la gâchette est actionnée par le passager 1 ou l'opérateur, et de ralentissement de ladite puissance, lorsque ladite gâchette est peu à peu relâchée par son utilisateur. Une telle interface 40 peut en outre comporter d'autres organes tels qu'un ou plusieurs boutons, par exemple des boutons poussoirs, pour éventuellement, établir des consignes de démarrage ou d'arrêt du groupe de poussée 12, établir des consignes d'actionnement du pied central 18 et/ou des moyens saillants 17 ou encore activer une procédure d'atterrissage assisté. L'activation d'un tel procédé d'atterrissage assisté via un tel bouton poussoir lorsque le dispositif de propulsion 10 est sensiblement positionné au-dessus de la surface de réception G, peut ainsi consister à provoquer la mise en œuvre d'un procédé d'atterrissage automatique, le dispositif de propulsion 10 mettant en œuvre automatiquement les différentes étapes pour assurer son atterrissage. Pour interpréter de tels gestes de son utilisateur, l'interface 40 peut comporter des moyens électroniques de traitement des différentes informations collectées par la gâchette et autres boutons pour produire des consignes interprétables par les moyens de traitement de telles consignes, plus particulièrement l'unité de traitement 30, embarqués au sein du dispositif de propulsion 10. Pour acheminer lesdites consignes à ces derniers moyens de traitement, l'interface Homme-Machine d'entrée 40 et l'unité de traitement 30 du dispositif 10 peuvent coopérer via des moyens de communication 41 filaires ou avantageusement sans fil, par exemple par voie radio.

Pour que le dispositif de propulsion 10 puisse éventuellement et avantageusement délivrer une assistance particulièrement innovante, bien que débrayable éventuellement sur demande ou autorisation expresse, à son utilisateur, que celui-ci soit passager ou opérateur, étudions à présent, en liaison avec un exemple non limitatif illustré par la figure 6, une architecture fonctionnelle selon laquelle différents organes de consigne et/ou de contrôle du fonctionnement dudit dispositif de propulsion permettent de mettre en œuvre un procédé de pilotage, également qualifié de procédé d'assistance, de l'atterrissage ou de l'amerrissage dudit dispositif de propulsion 10 sur une surface de réception G, éventuellement mouvante ou de faibles dimensions, assistant ainsi, voire contrôlant les trajectoires, assiettes et altitudes en réponse à des consignes de l'utilisateur ou des paramètres de configurations, lesdites consignes ou paramètres de configuration étant filtrés au regard d'un contexte de fonctionnement personnalisable selon le mode de réalisation d'un tel dispositif de propulsion 10 conforme à l'invention, pour ne conserver et ne traduire en ordres ou commandes que celles et ceux considérés comme pertinents par l'unité de traitement 30 dudit dispositif de propulsion 10.

En liaison avec les figures 5A à 5E et 6, un tel dispositif de propulsion 10, développant une assistance automatique à son utilisateur, comporte une unité de traitement 30 sous la forme d'un ou plusieurs microcontrôleurs ou processeurs, voire encore de convertisseurs de signaux numériques-analogiques. Ladite unité de traitement 30 est notamment chargée de délivrer des commandes de pilotage C17a, C18, C18a' des actionneurs 17a et 18a, assurant le déploiement ou plus particulièrement mouvementant en translation les moyens saillants 17 et le pied central 18 respectivement associés auxdits actionneurs 17a et 18a, et des commandes de puissance ou de pilotage C12m, C12m' des moyens de commande 12m du ou des groupes de poussée 12, pilotant la puissance du ou desdits groupes de poussée 12. Pour délivrer de telles commandes de pilotage C17a, C18, C18a', C12m, C12m', ces dernières doivent être élaborées par la mise en œuvre d'un procédé de pilotage de l'atterrissage d'un dispositif de propulsion conforme à l'invention. La mise en œuvre d'un tel procédé, dont les principales étapes S10, S20, S30, S41, S42, S50 et S60 sont illustrées en figure 6, par l'unité de traitement 30 peut être avantageusement provoquée par l'interprétation ou l'exécution d'instructions d'un produit programme d'ordinateur P dont lesdites instructions ont été préalablement chargées ou inscrites dans une mémoire de programmes 30MP coopérant, via un bus de communication filaire ou par couplage, avec ladite unité de traitement 30. Une telle unité de traitement 30 peut en outre comporter ou coopérer avec, à l'instar de la mémoire de programmes 30MP, une mémoire de données 30DM destinée à recueillir des données délivrées par d'autres organes, par exemple de capteurs, comme par exemple le capteur de proximité 18s, et/ou d'interfaces Homme-Machine de consigne 40, avant ou après traitement par l'unité de traitement 30. Une telle mémoire de données 30DM peut en outre enregistrer un ou plusieurs paramètres de configuration limitant les degrés de liberté que l'on souhaite accorder à l'utilisateur ou l'opérateur au regard de la surface de réception G. A titre d'exemples non limitatifs, de tels paramètres de configuration peuvent déterminer un référentiel, par exemple, sous la forme de mesures de distance de référence entre le capteur de proximité 18s et la surface de réception G, correspondant à des seuils prédéterminés.

Comme évoqué précédemment en liaison avec les figures 4 et 5A à 5E notamment, l'utilisateur d'un dispositif de propulsion 10 peut renseigner l'unité de traitement 30, par exemple par une gestuelle déterminée, en une consigne d'actionnement du pied central 18 et/ou des moyens saillants 17 ou encore de pilotage du ou des groupes de poussée 12, notamment en cas de défaillance de l'asservissement automatique du procédé d'atterrissage du dispositif de propulsion 10. Pour ce faire, comme mentionné précédemment, un dispositif de propulsion 10 conforme à l'invention peut comprendre ou coopérer avec une interface Homme-Machine de consigne 40 qui peut s'apparenter à une télécommande de type pistolet, comportant notamment une gâchette et d'autres organes, tels que des boutons. La course de chacun des organes, telle qu'une pression sur un boutoir poussoir dédié, peut être mesurée par un capteur adapté, par exemple un capteur inductif avantageusement à effet Hall, un tel capteur étant particulièrement précis grâce à sa fonction d'amplification du signal de mesure limitant ainsi tout bruit résultant de l'environnement. Par exemple, un premier bouton poussoir et un premier capteur associé peuvent avantageusement coopérer avec un premier actionneur 18a associé au pied central 18. Un premier signal C18a, délivré par un tel premier capteur, peut être considéré comme traduisant une consigne en actionnement du pied central 18, de nature à engendrer le déploiement du pied central 18. Un deuxième signal C18a', toujours délivré par un tel premier capteur, peut être considéré comme traduisant une consigne en actionnement du pied central 18, de nature à engendrer le repli du pied central 18. Également, en variante ou en complément, un deuxième bouton poussoir et un deuxième capteur associé peuvent avantageusement coopérer avec des deuxièmes actionneurs 17a associés aux moyens saillants 17. Un premier signal C17a, délivré par un tel deuxième capteur, peut être considéré comme traduisant une consigne en actionnement des moyens saillants 17, de nature à engendrer les déploiements conjoints ou distincts des moyens saillants 17. L'invention ne saurait toutefois être limitée à ces seuls exemples d'organes. Comme mentionné précédemment, l'interface Homme-Machine de consigne 40 d'un dispositif de propulsion 10 conforme à l'invention peut également comporter une gâchette et/ou un troisième bouton poussoir coopérant avec le ou les groupes de poussée 12, respectivement associés à des capteurs dédiés délivrant des signaux C12m, C12m'. De tels signaux C12m, C12m' peuvent être considérés comme traduisant des consignes de pilotage du ou des groupes, de sorte respectivement à produire une rétro-poussée stabilisatrice et permettre, ou provoquer l'extinction du ou des groupes de poussée 12. D'autres capteurs pourraient en variante et/ou en complément être associés à d'autres interfaces Homme-Machine de consigne. De telles interfaces pourraient elles-mêmes délivrer directement des données ou signaux caractérisant des consignes de l'utilisateur du dispositif de propulsion 10.

Pour asservir l'atterrissage ou l'amerrissage d'un dispositif de propulsion 10 conforme à l'invention sur une surface de réception G donnée, l'unité de traitement 30 coopère avantageusement, par voie filaire ou sans fil, avec un capteur de proximité 18s, éventuellement un ensemble de capteurs, tels que décrits précédemment, permettant de délivrer à chaque instant une mesure M18s1, M18s2 représentative d'une distance d entre ledit capteur de proximité 18s et la surface de réception G. Connaissant la distance d entre ledit capteur de proximité 18s et la surface de réception G, l'unité de traitement 30 peut mettre en œuvre un procédé de pilotage de l'atterrissage d'un dispositif de propulsion 10 conforme à l'invention, dont un exemple non limitatif est illustré en figure 6.

Selon cet exemple, le dispositif de propulsion 10 comporte, à titre optionnel, un pied central 18 associé à un actionneur 18a que l'unité de traitement 30 peut piloter pour escamoter ou déployer ledit pied. L'unité de traitement 30 d'un tel dispositif 10 peut mettre en œuvre une étape S10 pour collecter et comparer une première mesure M18s1 de distance d entre le capteur de proximité 18s et la surface de réception G délivrée par le capteur de proximité 18s à un premier seuil prédéterminé MS1. Lorsque la première mesure M18s1 de distance d entre le capteur de proximité 18s et la surface de réception G délivrée par le capteur de proximité 18s est sensiblement égale au premier seuil prédéterminé MS1 (situation illustrée par le lien S10-y sur la figure 6), l'unité de traitement 30 peut mettre en œuvre une étape S20 pour élaborer et délivrer une commande C18a interprétable par le premier actionneur 18a associé au pied central 18 de sorte à permettre, ou provoquer le déploiement dudit pied central 18. Une telle étape S20 est illustrée en lien avec la figure 5A. Dans le cas contraire (situation illustrée par le lien S10-n sur la figure 6), l'unité de traitement 30 réitère l'étape S10 pour collecter et comparer une première mesure M18s1 de distance d entre le capteur de proximité 18s et la surface de réception G délivrée par le capteur de proximité 18s à un premier seuil prédéterminé MS1, jusqu'à ce que la première mesure M18s1 de distance d entre le capteur de proximité 18s et la surface de réception G délivrée par le capteur de proximité 18s soit sensiblement égale au premier seuil prédéterminé MS1. Selon les structures et les dimensions respectives du dispositif de propulsion 10 et de la surface de réception G, mais également les conditions environnementales entourant l'atterrissage, le premier seuil MS1 peut varier de quelques centimètres à un mètre. Selon les figures 5A à 5E et 6, le déploiement du pied central 18, lorsque celui-ci consiste en une colonne télescopique, peut être stoppé une fois la course de la colonne télescopique définitivement déployée. En variante ou en complément, le déploiement du pied central 18 peut éventuellement être stoppé au moyen d'un organe de consigne d'une interface homme-machine d'entrée 40, telle que décrit précédemment. Selon une variante de réalisation d'un procédé de pilotage de l'atterrissage d'un dispositif de propulsion 10 conforme à l'invention, lorsque ce dernier comporte un pied central 18 préférentiellement flexible et continuellement déployé, lesdites étapes S10 et S20 dudit procédé précédemment décrites ne sont pas mises en œuvre ou prévues.

Quelle que soit la configuration du pied central 18, que celui-ci puisse être déployé sur commande ou non, l'unité de traitement 30 peut mettre en œuvre une étape S30 pour collecter et comparer une deuxième mesure M18s2 de distance entre le capteur de proximité 18s et la surface de réception G délivrée par le capteur de proximité 18s à un deuxième seuil prédéterminé MS2.

Lorsque la deuxième mesure M18s2 de distance d entre le capteur de proximité 18s et la surface de réception G délivrée par le capteur de proximité 18s est sensiblement égale au deuxième seuil prédéterminé MS2, l'unité de traitement 30 peut mettre en œuvre une étape S50 pour élaborer et délivrer une commande C17a interprétable par le deuxième actionneur 17a associé aux moyens saillants 17, de sorte à permettre, ou provoquer les déploiements conjoints ou distincts des moyens saillants 17. Une telle étape S50 peut éventuellement être mise en œuvre après un repli total du pied central 18, si celui-ci le permet. Éventuellement, le déclenchement de l'étape S50 peut être mis en œuvre, lorsqu'une troisième mesure de distance entre le capteur de proximité 18s et la surface de réception G délivrée par le capteur de proximité 18s est sensiblement égale à un troisième seuil prédéterminé MS2. En variante ou en complément, l'invention prévoit que chaque moyen saillant 17 puisse comporter un capteur de proximité respectif agencé pour délivrer une mesure représentative d'une distance entre ledit capteur de proximité en lien avec le moyen saillant 17 et la surface de réception. L'unité de traitement 30 peut alors mettre en œuvre une sous-étape S50a pour collecter et comparer ladite mesure à un seuil prédéterminé.

En variante ou en complément, l'invention prévoit que l'unité de traitement 30 puisse mettre en œuvre un déploiement distinct des moyens saillants 17. Comme mentionné précédemment, l'atterrissage d'un dispositif de propulsion peut s'avérer relativement fastidieux sur une surface de réception mouvante par exemple, puisque le pilote ou l'opérateur doit faire preuve d'une certaine dextérité pour pouvoir poser chacun des moyens saillants 17 sur la surface de réception, tout en conservant l'équilibre et la stabilité du dispositif de propulsion 10. L'invention offre une assistance automatisée à cet inconvénient en proposant un déploiement distinct des moyens saillants 17. A titre d'exemples non limitatifs, selon le mode de réalisation préféré décrit en lien avec les figures 4 et 5A à 5E, les quatre pieds périphériques 17 peuvent être déployés distinctement et successivement, chaque pied périphérique étant associé à un deuxième actionneur 17a. Une fois le pied central 18 en contact avec la surface de réception G, l'unité de traitement 30 peut mettre en œuvre une première sous-étape S51 pour élaborer et délivrer une commande interprétable par le deuxième actionneur associé à un premier pied périphérique 17, de sorte à permettre le déploiement dudit premier pied périphérique 17. Une fois le premier périphérique en contact avec la surface de réception G, l'unité de traitement 30 peut mettre en œuvre une deuxième sous-étape S52 pour élaborer et délivrer une commande interprétable par le deuxième actionneur associé à un deuxième pied périphérique 17, de sorte à permettre le déploiement dudit deuxième pied périphérique. Le déploiement, que celui-ci soit commandé ou constant du pied central 18 et le déploiement des premier et deuxième pieds périphériques 17 permettent de réaliser trois points de contacts, entrainant l'immobilisation et la stabilisation du dispositif de propulsion 10 sur la surface de réception G. L'unité de traitement 30 peut alors mettre en œuvre une troisième sous-étape S53 pour élaborer et délivrer des commandes interprétables par les actionneurs associés aux troisième et quatrième pieds périphériques 17, de sorte à permettre les déploiements respectifs desdits troisième et quatrième pieds périphériques.

Lorsque ladite deuxième mesure de distance M18s2 atteint le deuxième seuil prédéterminé MS2, subséquemment voire conjointement à l'étape S50 pour élaborer et délivrer une commande C17a interprétable par le deuxième actionneur 17a associé aux moyens saillants 17, l'unité de traitement 30 peut mettre en œuvre une étape S41 pour élaborer et délivrer une commande C12m' interprétable par les moyens de commande 12m associés aux groupe de poussée 12, de sorte à produire une rétro-poussée stabilisatrice, également qualifiée de « poussée inversée ». La création d'une telle rétro-poussée s'avère particulièrement astucieuse, puisqu'elle permet la création d'un effet « ventouse » et ainsi le plaquage du dispositif de propulsion sur la surface de réception. La rétro-poussée permet ainsi de s'affranchir des conditions météorologiques qui peuvent directement affecter le dispositif de propulsion 10 lors de la phase d'atterrissage.

Lorsque la deuxième mesure M18s2 de distance d entre le capteur de proximité 18s et la surface de réception G délivrée par le capteur de proximité 18s est sensiblement égale au deuxième seuil prédéterminé MS2 et donc que les moyens saillants 17 sont déployés, subséquemment voire conjointement à l'étape S50, l'unité de traitement 30 peut mettre en œuvre une étape S42 pour élaborer et délivrer une commande C18a' interprétable par le premier actionneur 18a associé au pied central 18 de sorte à permettre le repli dudit pied central 18 : un tel repli peut être qualifié de repli actif. Le repli est généralement initié, avantageusement après le déploiement des moyens saillants 17, représenté par l'étape S50, et donc à fortiori, lorsque le deuxième seuil est sensiblement nul et que le pied central 18 entre en contact avec la surface de réception G. Une telle étape S42 est illustrée en lien avec la figure 5C. Dans le cas contraire, l'unité de traitement 30 peut réitérer l'étape S30 pour collecter et comparer une deuxième mesure M18s2 de distance d entre le capteur de proximité 18s et la surface de réception G délivrée par le capteur de proximité 18s à un deuxième seuil prédéterminé MS1, jusqu'à ce que la deuxième mesure M18s2 de distance d entre le capteur de proximité 18s et la surface de réception G délivrée par le capteur de proximité 18s soit sensiblement égale au deuxième seuil prédéterminé MS1 et ainsi que l'étape S50 puisse être exécutée.

En variante, l'invention prévoit que le repli dudit pied central 18 puisse être réalisé passivement : en effet, de par sa structure, lorsque le pied central 18 consiste par exemple en une colonne télescopique munie d'un ou plusieurs ressorts ou organes de rappel ou encore, lorsque le pied central 18 est principalement constitué d'un matériau flexible, celui-ci peut être mécaniquement replié selon les figures 5A à 5E et 6, le déploiement du pied central 18, lorsque celui-ci consiste en une colonne télescopique, peut être stoppé une fois la course de la colonne télescopique définitivement déployée. En variante ou en complément, le déploiement du pied central 18 peut éventuellement être stoppé au moyen d'un organe de consigne d'une interface homme-machine d'entrée 40, telle que décrite précédemment.

Enfin une fois les moyens saillants 17 déployés et stabilisés sur la surface de réception G, l'unité de traitement peut mettre en œuvre une étape S60, subséquente à l'étape S50 pour élaborer et délivrer une commande C17a interprétable par le deuxième actionneur 17a associé aux moyens saillants 17, pour élaborer et délivrer une commande C12m' interprétable par les moyens de commande 12m associés au groupe de poussée 12, de sorte à permettre, ou provoquer l'extinction dudit groupe de poussée 12. Le dispositif de propulsion 10 ayant atterri et étant stabilisé en toute sécurité, le ou les groupes de poussée 12 peuvent alors être complétement coupés.

L'invention prévoit en outre, selon un mode de réalisation avantageux pour faciliter une phase d'atterrissage du dispositif de propulsion 10, qu'un tel procédé puisse comporter, à l'approche du contact entre la surface de réception G et la partie distale dudit pied central 18, une étape S21 pour élaborer et délivrer une commande C12m" interprétable par les moyens de commande 12m associés au groupe de poussée 12, de sorte à piloter la puissance du groupe de poussée 12 et de produire une poussée stabilisatrice. Une telle poussée stabilisatrice facilite le contact « en douceur » du pied central 18, et plus largement du dispositif de propulsion 10, avec la surface de réception G.

L'exemple de procédé de pilotage de l'atterrissage d'un dispositif de propulsion 10 ainsi décrit pourrait comporter d'autres étapes intermédiaires pour tenir compte d'autres mesures, comme par exemple la puissance du ou des groupes de poussée 12 dudit dispositif de propulsion 10 ou d'autres consignes ou données complémentaires, comme par exemple, des mesures relatives aux mouvements subis par la surface de réception G ou encore les dimensions de ladite surface de réception G.

Nous pouvons remarquer que, en l'absence de toute consigne de pilotage ou d'actionneur par l'utilisateur, la mise en œuvre du procédé de pilotage de l'atterrissage du dispositif de propulsion, permet automatiquement de réaliser un atterrissage automatique sur une surface de réception donnée, conférant ainsi une assistance de pilotage aujourd'hui inégalé pour le passager ou l'opérateur d'un tel dispositif de propulsion. Par ailleurs, un tel procédé de pilotage de l'atterrissage d'un dispositif de propulsion conforme à l'invention permet notamment d'optimiser l'aire de la surface de réception nécessaire pour réaliser un tel atterrissage et de diminuer les impacts avec des corps étrangers.

Par ailleurs, l'unité de traitement 30 peut comporter ou coopérer avec une ou plusieurs sources d'alimentation électriques 30PS, chargées d'alimenter en électricité les éléments actifs, l'unité de traitement elle-même et/ou capteurs ou actionneurs d'un dispositif de propulsion 10 conforme à l'invention.

Enfin, l'invention prévoit que l'unité de traitement 30 puisse enregistrer un historique des consignes et/ou commandes de pilotage et/ou d'actionnement produites, voire encore des données de distance éventuellement délivrées par le capteur de proximité 18s ou tout autre capteur embarqué au sein du dispositif de propulsion, à des fins de monitoring ou de contrôle d'utilisation d'un dispositif de propulsion 10 conforme à l'invention. Un tel historique peut être sauvegardé dans la mémoire de données 30DM et être accessible en lecture depuis un objet électronique communicant, par exemple un ordinateur personnel, un téléphone mobile intelligent ou une tablette interactive pour consultation. Une telle communication peut en outre permettre de modifier le programme P inscrit dans la mémoire de programmes 30PM et/ou certains paramètres de configuration sauvegardés dans ladite mémoire de données 30DM, afin de modifier, sur demande, le comportement du dispositif de propulsion 10 et l'assistance automatique délivrée par ce dernier lors de son atterrissage. Il est ainsi possible de modifier tout ou partie des instructions et/ou données de paramètres exploitées par le produit programme P provoquant la mise en œuvre du procédé de pilotage des tuyères secondaires par l'unité de traitement 30.

## Revendications

1. Procédé de pilotage de l'atterrissage d'un dispositif de propulsion (10) qui comporte :
- une plateforme (11),
- un groupe de poussée (12),
- des moyens supports (14) agencés pour maintenir et soutenir ledit groupe de poussée (12), coopérant solidairement avec ladite plateforme (11) selon une ou plusieurs liaisons mécaniques adaptées,
- des moyens saillants (17) rétractables, coopérant solidairement selon des liaisons mécaniques adaptées avec la plateforme (11), chaque moyen saillant (17) présentant une extrémité dite « proximale » représentant sa partie la plus proche de la plateforme (11), et une extrémité dite « distale » représentant sa partie la plus éloignée de la plateforme (11), la distance entre son extrémité proximale et son extrémité distale définissant la longueur (17L) de chaque moyen saillant (17),
- des actionneurs (17a) associés aux moyens saillants (17) et pilotables par commandes électriques, chaque actionneur (17a) étant respectivement agencé pour provoquer conjointement ou distinctement un mouvement de translation desdits moyens saillants (17),
- un pied central (18), passant par le centre d'inertie du dispositif de propulsion (10) et coopérant solidairement selon une liaison mécanique adaptée en son extrémité proximale avec la plateforme (11), ledit pied central (18) présentant une extrémité dite « proximale » représentant sa partie la plus proche de la plateforme (11), et un extrémité dite « distale » représentant sa partie la plus éloignée de la plateforme (11), la distance entre son extrémité proximale et son extrémité distale définissant la longueur (18L) dudit pied central (18), les moyens saillants (17) et le pied central (18) étant mutuellement agencés de sorte que la longueur (18L) du pied central (18) soit supérieure à la longueur (17L) de chaque moyen saillant (17) et que le pied central (18) assure le premier contact entre le dispositif de propulsion (10) et une surface de réception (G) dudit dispositif (10),
- un capteur de proximité (18s) agencé pour délivrer une mesure (M18s1, M18s2), consistant en un capteur de détection de contact et coopérant solidairement avec ledit pied central (18),
- une unité de traitement (30) conçue pour élaborer des commandes électriques (C17a) d'actionneurs à partir d'une consigne de pilotage et/ou d'un référentiel déterminé (MS1, MS2) par un ou plusieurs paramètres de configuration,
ledit procédé étant mis en œuvre par ladite unité de traitement (30) dudit dispositif de propulsion (10) et étant **caractérisé en ce qu'**il comporte :
- une étape (S30) de collecte d'une première mesure (M18s2) délivrée par le capteur de proximité (18s), ladite première mesure (M18s2) étant une mesure de contact dudit pied central (18) avec la surface de réception (G) ;
- une étape (S50) d'élaboration et de délivrance d'une commande (C17a) électrique des actionneurs (17a) associés aux moyens saillants (17), de sorte à provoquer les déploiements conjoints ou distincts des moyens saillants (17) lorsque ladite première mesure (M18s2) caractérise le premier contact entre le pied central (18) et ladite surface de réception (G).

2. Procédé selon la revendication précédente, dans lequel l'étape (S50) d'élaboration et délivrance d'une commande (C17a) électrique des actionneurs (17a) associés aux moyens saillants (17), de sorte à provoquer les déploiements conjoints ou distincts des moyens saillants (17), comporte trois sous-étapes, dans le cas d'un déploiement distinct des moyens saillants (17), consistant en :
- une première sous-étape (S51) d'élaboration et de délivrance d'une commande électrique de l'actionneur associé à un premier moyen saillant (17), de sorte à provoquer le déploiement dudit premier moyen saillant (17) ;
- une deuxième sous-étape (S52) d'élaboration et de délivrance d'une commande électrique de l'actionneur associé à un deuxième moyen saillant (17), de sorte à provoquer le déploiement dudit deuxième moyen saillant (17) ;
- une troisième sous-étape (S53) d'élaboration et de délivrer des commandes électriques des actionneurs associés à un troisième moyen saillant (17) et à un quatrième moyen saillant (17), de sorte à provoquer les déploiements respectifs desdits troisième et quatrième moyens saillants (17).

3. Procédé selon l'une des quelconque des revendications précédentes, lorsque le dispositif de propulsion dont l'unité de traitement met en œuvre ledit procédé comporte en outre des moyens de commande (12m) du groupe de poussée (12), ledit procédé comportant, de manière subséquente voire conjointe à l'étape (S50) d'élaboration et de délivrance d'une commande (C17a) électrique des actionneurs (17a) associés aux moyens saillants (17), une étape (S41) d'élaboration et de délivrance d'une commande (C12m') des moyens de commande (12m) du groupe de poussée (12), de sorte à produire une rétro-poussée stabilisatrice lorsque ladite première mesure de distance (M18s2) caractérise le premier contact entre le pied central (18) et ladite surface de réception (G).

4. Procédé selon la revendication précédente, comportant une étape (S60) d'élaboration et de délivrance d'une commande (C12m') des moyens de commande (12m) du groupe de poussée (12), de sorte à provoquer l'extinction dudit groupe de poussée (12) lorsque les moyens saillants (17) sont déployés et stabilisés au contact de la surface de réception (G).

5. Procédé selon l'une des revendications précédentes, lorsque le dispositif de propulsion (10) dont l'unité de traitement (30) met en œuvre ledit procédé comporte un actionneur (18a) coopérant avec le pied central (18), ce dernier étant rétractable et ledit actionneur (18a) étant agencé pour provoquer un mouvement de translation dudit pied central (18), ledit procédé comportant, lorsque les moyens saillants (17) sont déployés et stabilisés au contact de la surface de réception (G), une étape (S42), subséquente à l'étape (S50) d'élaboration et de délivrance d'une commande (C17A) électrique des actionneurs (17a) associés aux moyens saillants (17), d'élaboration et de délivrance d'une commande électrique (C18a') de l'actionneur (18a) associé au pied central (18), de sorte à autoriser le repli dudit pied central (18).

6. Dispositif de propulsion (10) comportant :
- une plateforme (11),
- un groupe de poussée (12),
- des moyens supports (14) agencés pour maintenir et soutenir ledit groupe de poussée (12), coopérant solidairement selon des liaisons mécaniques adaptées avec la plateforme (11),
- des moyens saillants (17) rétractables, coopérant solidairement selon des liaisons mécaniques adaptées avec la plateforme (11), chaque moyen saillant (17) présentant une extrémité dite « proximale » représentant sa partie la plus proche de la plateforme (11), et une extrémité dite « distale » représentant sa partie la plus éloignée de la plateforme (11), la distance entre son extrémité proximale et son extrémité distale définissant la longueur (17L) de chaque moyen saillant (17),
- des actionneurs (17a) associés aux moyens saillants (17) et pilotables par commandes électriques, chaque actionneur (17a) étant respectivement agencé pour provoquer conjointement ou distinctement un mouvement de translation desdits moyens saillants (17),
- un pied central (18), passant par le centre d'inertie du dispositif de propulsion (10) et coopérant solidairement selon une liaison mécanique adaptée en son extrémité proximale avec la plateforme (11), ledit pied central (18) présentant une extrémité dite « proximale » représentant sa partie la plus proche de la plateforme (11), et un extrémité dite « distale » représentant sa partie la plus éloignée de la plateforme (11), la distance entre son extrémité proximale et son extrémité distale définissant la longueur (18L) dudit pied central (18), les moyens saillants (17) et le pied central (18) étant mutuellement agencés de sorte que la longueur (18L) du pied central (18) soit supérieure à la longueur (17L) de chaque moyen saillant (17) et que le pied central (18) assure le premier contact entre le dispositif de propulsion (10) et une surface de réception (G) dudit dispositif (10),
- un capteur de proximité (18s) agencé pour délivrer une mesure (M18s1, M18s2), ), consistant en un capteur de détection de contact et coopérant solidairement avec ledit pied central (18),
- une unité de traitement (30),
**caractérisé en ce que** ladite unité de traitement (30) élabore des commandes électriques (C17a) des actionneurs (17a) associés aux moyens saillants (17) selon un procédé de pilotage conforme à l'une des revendications 1 à 4.

7. Dispositif de propulsion selon la revendication précédente, comportant en outre un actionneur (18a) coopérant avec le pied central (18), ce dernier étant rétractable et ledit actionneur (18a) étant agencé pour provoquer un mouvement de translation dudit pied central (18) et pour lequel ladite unité de traitement (30) élabore une commande (C18a) électrique de l'actionneur (18a) associé au pied central (18) selon un procédé de pilotage conforme à la revendication 5.

8. Dispositif de propulsion (10) selon l'une des revendications 6 à 7, comportant une interface Homme-Machine d'entrée (40) conçue pour traduire une gestuelle d'un utilisateur en une consigne d'actionnement des moyens saillants (17) ou de pilotage du groupe de poussée (12).

9. Dispositif de propulsion selon l'une des revendications 6 à 8, pour lequel la plateforme (11) est agencée pour accueillir un ou plusieurs passagers.

10. Dispositif de propulsion selon l'une quelconque des revendications 6 à 9, pour lequel le groupe de poussée (12) est agencé pour fournir une force de poussée résultante orientée selon une direction de sorte à fournir une capacité de décollage et d'atterrissage sensiblement verticaux.

11. Dispositif de propulsion selon l'une quelconque des revendications 6 à 10, pour lequel les moyens saillants (17) comprennent quatre pieds périphériques ou deux patins d'atterrissage.
